# EUROPEAN PATENT SPECIFICATION

(11) **EP 4 564 826 B1**
(45) Date of publication and mention of the grant of the patent: **09.12.2026**
(21) Application number: 23890567.3
(22) Date of filing: 31.10.2023
(51) Int. Cl.: G06F 3/14, G06F 3/0482, G06F 3/04842, G06F 3/0485, G06F 3/04883, G06F 3/04886, G06F 9/451, G09G 5/14, H04N 21/41, H04N 21/43, H04N 21/485

(54) **METHOD FOR GAINING WINDOW FOCUS IN MULTI-WINDOW SCENARIO, DEVICE AND SYSTEM**
VERFAHREN ZUR GEWINNUNG EINES FENSTERFOKUS IN EINEM MEHRFENSTERSZENARIO, VORRICHTUNG UND SYSTEM
PROCÉDÉ POUR OBTENIR UNE FOCALISATION SUR UNE FENÊTRE DANS UN SCÉNARIO À FENÊTRES MULTIPLES, DISPOSITIF ET SYSTÈME

(30) Priority: 17.11.2022 CN 202211441416
(43) Date of publication of application: 04.06.2025
(73) Proprietor: Huawei Technologies Co., Ltd., Shenzhen, Guangdong 518129 (CN)
(72) Inventor: HE, Shujie, Shenzhen, Guangdong 518129 (CN); CAI, Shizong, Shenzhen, Guangdong 518129 (CN)
(74) Representative: Goddar, Heinz J.
(86) International application number: PCT/CN2023/128127
(87) International publication number: WO 2024/104131

(56) References cited:
- WO-A1-2022/057852
- CN-A- 109 240 790
- CN-A- 110 457 109
- CN-A- 113 741 840
- CN-B- 107 329 717
- US-A1- 2014 298 355
- US-A1- 20230 367 464
- US-B1- 6 600 500

## Description

This application claims priority to Chinese Patent Application No. 202211441416.8, filed with the China National Intellectual Property Administration on November 17, 2022 and entitled "WINDOW FOCUSING METHOD IN MULTI-WINDOW SCENARIO, DEVICE, AND SYSTEM".

### TECHNICAL FIELD

This application relates to the field of terminal application technologies, and in particular, to a window focusing method in a multi-window scenario, a device, and a system.

### BACKGROUND

With development of terminal technologies and application display technologies, increasing electronic devices support application interface display in scenarios such as a single-device multi-window scenario and a multi-window projection scenario.

Currently, in a multi-window scenario, only one window can be focused at a time. A focused window (also referred to as a focus window) is a window that can currently receive and respond to a user operation. However, with wide application of a multi-window scenario, a requirement for a user to operate a plurality of windows concurrently is increasingly urgent, but a conventional window focusing method cannot meet the requirement of the user.

For example, if a window A and a window B are displayed on a terminal device, and the window A is a current focus window, when a user performs an operation on the window B, the current focus window is switched from the window A to the window B. For another example, if a terminal device projects an interface 1 and an interface 2 onto a collaboration device, and the window A in which the interface 1 on the terminal device side is located is a current focus window, when a user performs an operation on a window B in which an interface 2 on the collaboration device side is located, the current focus window is switched from the window A on the terminal device side to the window B on the collaboration device side. In the foregoing examples, after the focus window is switched from the window A to the window B, the window A is no longer the focus window. Therefore, an operation of the user on the window B interrupts an operation of the user on the window A. Consequently, user experience is poor.

US 2014/298355 A1 discloses an Application (APP) operating method, an APP operating device, and an APP output device for supporting the APP operating method are provided. The APP operating method includes connecting an APP operating device and an APP output device, transmitting, by the APP operating device, APP data corresponding to a plurality of APPs being executed in the APP operating device to the APP output device, and outputting, by the APP output device, a plurality of APP areas respectively corresponding to the APP data.

### SUMMARY

This application provides a window focusing method in a multi-window scenario, a device, and a system, so that a plurality of windows in the multi-window scenario are used as focus windows simultaneously, and the plurality of windows receive and respond to user operations concurrently, thereby improving user experience.

To achieve the foregoing objectives, the following technical solutions are used in embodiments of this application.

According to a first aspect, a window focusing method in a multi-window scenario is provided, where the method includes: A first device displays a first interface in a first window, and projects a second interface onto a second device; the first device receives second window information from the second device, where the second window information indicates that the second interface is displayed in a second window of the second device; and when receiving a first operation on the first window and a second operation on the second interface in the second window, the first device responds to the first operation and the second operation concurrently.

For example, the multi-window scenario may be a multi-window projection scenario. The first device may perform projection onto the second device in a same-source projection manner, or may perform projection onto the second device in a different-source projection manner.

For example, the first window is the window A in the embodiments, and the second window is the window B' in the embodiments. The first interface is the interface 1 in the embodiments, and the second interface is the interface 2 in the embodiments.

According to the solution provided in the first aspect, in a multi-window projection scenario, according to the solution provided in this application, a user can perform an operation on a window on the first device side and an operation on an interface in a window on the second device side simultaneously, and the first operation and the second operation the second device can be responded to synchronously. This resolves a problem in the conventional technology that the user cannot perform operations on different windows on the first device side and the second device concurrently, and improves user experience.

In a possible implementation, the first window and the second window are both focus windows. It may be understood that the focus window is a window that may currently receive and respond to a user operation. In this application, the first window and the second window are both focus windows. Therefore, in the multi-window projection scenario, the user can perform the operation on the first window on the first device side and the operation on the interface in the second window on the second device side simultaneously, and the first operation and the second operation can be responded to synchronously. This resolves a problem in the conventional technology that the user cannot simultaneously perform operations on different windows on the first device side and the second device concurrently.

In a possible implementation, the method further includes: when the first device performs projection onto the second device, the first device maintains window information, where the window information includes first window information and the second window information. The window information includes a window identifier, a level attribute of a window, a screen identifier of a screen on which the window is located, and an interface identifier of an interface displayed in the window. In this application, the first device maintains window information of a locally displayed window (for example, the first window) and window information of a window (for example, the second window) that is on the second device side and that is used to display a projection interface (for example, the second interface). Based on this, the first device may identify a target screen, a target window, and a target interface on which a user operation is performed, to smoothly respond to the user operation.

In a possible implementation, level attributes of the first window and the second window are both top-level windows. In this application, the level attributes of the first window and the second window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

In a possible implementation, the first operation is an operation on the first interface in the first window, and the first operation includes a tap operation, a slide operation, or a touch and hold operation on the first interface. A specific object on which the user operation is performed is not limited in this application. For example, the user operation may be an operation on an interface in a window.

In a possible implementation, that the first device responds to the first operation and the second operation concurrently includes: The first device executes a first action and a second action concurrently. The first action includes: determining, based on the first operation, that a target window on which the first operation is performed is the first interface in the first window; updating the first interface based on the first operation; and displaying an updated first interface in the first window. The second action includes: determining, based on the second operation, that a target window on which the first operation is performed is the second interface in the second window; updating the second interface based on the second operation; and sending an interface configuration parameter of an updated first interface to the second device, to indicate the second device to display the updated second interface in the second window. According to the solution provided in this application, the operation of the user on the interface on the first device side and the operation of the user on the projection interface on the second device side can be responded to concurrently.

In an example, the first device may determine, based on input device information of a user operation (for example, the first operation or the second operation), information about a device for receiving an input operation, specific operation details, and the like, and with reference to the window information maintained in the first device, the target window on which the first operation is performed, and determine the target interface in the target window on which the first operation is performed, so as to smoothly update the target interface.

For example, the input device information is, for example, a device identifier of an input device. The information about the device for receiving the input operation is, for example, an identifier of the device for receiving the input operation. The specific operation details may include but are not limited to an operation type, an operation location, and the like. The operation type includes a tap operation, a touch and hold operation, a slide operation, a character input operation, a cursor movement operation, a speech input operation, a gesture operation, and the like. If the operation type is a character input operation or a speech input operation, the specific operation details may further include specific input content.

In a possible implementation, the first operation is an operation on a body of the first window, and the first operation includes: closing the first window, adjusting a size of the first window, adjusting a display style of the first window, and adjusting a location of the first window. A specific object on which the user operation is performed is not limited in this application. For example, the user operation may be an operation on a body of a window.

In a possible implementation, that the first device responds to the first operation and the second operation concurrently includes: The first device executes a first action and a second action concurrently. The first action includes: determining, based on the first operation, that the first operation is performed on the body of the first window; and adjusting the first window based on the first operation. The second action includes: determining, based on the second operation, that a target window on which the first operation is performed is the second interface in the second window; updating the second interface based on the second operation; and sending an interface configuration parameter of an updated first interface to the second device, to indicate the second device to display the updated second interface in the second window. According to the solution provided in this application, the operation of the user on the window body on the first device side and the operation of the user on the projection interface on the second device side can be responded to concurrently.

In a possible implementation, the method further includes: When the first window is initially started, the first device sets the level attribute of the first window as the top-level window; or when the user performs an operation on the first window for the first time, the first device sets the level attribute of the first window as the top-level window. In the window information maintained by the first device, a specific occasion at which a level attribute of a local window is set as the top-level window is not limited in this application. For example, the first device may trigger setting the local window as the top-level window when the local window is initially started. For another example, the first device may trigger setting the local window as the top-level window when the user operates the local window for the first time.

In a possible implementation, the foregoing method further includes: When receiving the second window information from the second device, the first device sets a level attribute of the second window as the top-level window; or when the user operates the second window for the first time, the first device sets a level attribute of the second window as the top-level window. In the window information maintained by the first device, a specific occasion at which a level attribute of a window for displaying the projection interface on the second device side is set as the top-level window is not limited in this application. For example, the first device may trigger, when receiving window information, from the second device, about the window for displaying the projection interface, setting the window as the top-level window. For another example, the first device may trigger, when the user performs an operation on the projection interface on the second device side for the first time, setting the window in which the projection interface is located as the top-level window.

In a possible implementation, the method further includes: The first device projects a third interface onto the second device; the first device receives third window information from the second device, where the third window information indicates that the second device displays the third interface in a third window; and when receiving a third operation on the second interface in the second window and a fourth operation on the third interface in the third window simultaneously, the first device responds to the third operation and the fourth operation concurrently. The solution in this application is applicable to a scenario in which the first device projects a plurality of interfaces onto the second device. In addition, according to the solution in this application, the user can perform operations on a plurality of windows on the second device side simultaneously, and a plurality of operations of the user on the plurality of windows can be responded to synchronously. This resolves a problem in the conventional technology that the user cannot simultaneously perform operations on different windows on an electronic device concurrently, and improves user experience.

**In** a possible implementation, the third window is a focus window. It may be understood that the focus window is a window that may currently receive and respond to a user operation. **In** this application, the second window and the third window are both focus windows. Therefore, in a multi-window projection scenario, the user can perform operations on the second window and the third window simultaneously, and operations of the user on the second window and the third window can be responded to synchronously. This resolves a problem in the conventional technology that the user cannot simultaneously perform operations on different windows on an electronic device concurrently.

**In** a possible implementation, a level attribute of the third window is the top-level window. **In** this application, the level attributes of the second window and the third window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

**In** a possible implementation, the method further includes: The first device displays a fourth interface in a fourth window; and when receiving a fifth operation of the user on the first window and a sixth operation of the user on the fourth window simultaneously, the first device responds to the fifth operation and the sixth operation concurrently. According to the solution in this application, the user can perform operations on a plurality of windows on the first device side simultaneously, and a plurality of operations of the user on the plurality of windows can be responded to synchronously. This resolves a problem in the conventional technology that the user cannot simultaneously perform operations on different windows on an electronic device concurrently, and improves user experience.

**In** some examples, even if it is not in a projection scenario, according to the solution in this application, the user can perform operations on a plurality of windows on the electronic device (for example, the first device) synchronously, and the plurality of operations of the user on the plurality of windows can be responded to synchronously.

**In** a possible implementation, the fourth window is a focus window. **In** this application, the first window and the fourth window are both focus windows. Therefore, in a multi-window projection scenario, the user can perform operations on the first window and the fourth window simultaneously, and operations of the user on the first window and the fourth window can be responded to synchronously.

In a possible implementation, a level attribute of the fourth window is the top-level window. In this application, the level attributes of the first window and the fourth window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

In a possible implementation, the fifth operation is an operation on the first interface in the first window, and the sixth operation is an operation on the fourth interface in the fourth window; or the fifth operation is an operation on the first interface in the first window, and the sixth operation is an operation on a body of the fourth window; or the fifth operation is an operation on the body of the first window, and the sixth operation is an operation on the fourth interface in the fourth window; or the fifth operation is an operation on the body of the first window, and the sixth operation is an operation on a body of the fourth window. A specific object on which the user operation is performed is not limited in this application. For example, the user operation may be an operation on a body of a window, or may be an operation on an interface in a window.

According to a second aspect, a window focusing method in a multi-window scenario is provided. The method includes: A first device displays a first interface in a first window, and projects a second interface onto a second device; the second device displays the second interface in a second window; the first device and the second device separately receive a first operation on the first window and a second operation on the second interface in the second window simultaneously; and the first device responds to the first operation and the second operation concurrently.

According to the solution provided in the second aspect, in a multi-window projection scenario, according to the solution provided in this application, a user can perform an operation on a window on the first device side and an operation on an interface in a window on the second device side simultaneously, and the first operation and the second operation the second device can be responded to synchronously. This resolves a problem in the conventional technology that the user cannot simultaneously perform operations on different windows on the first device side and the second device concurrently, and improves user experience.

In a possible implementation, the first window and the second window are both focus windows. In this application, the first window and the second window are both focus windows. Therefore, in the multi-window projection scenario, the user can perform the operation on the first window on the first device side and the operation on the interface in the second window on the second device side simultaneously, and the first operation and the second operation can be responded to synchronously. This resolves a problem in the conventional technology that the user cannot simultaneously perform operations on different windows on the first device side and the second device concurrently.

In a possible implementation, the method further includes: The first device receives second window information from the second device, and the first device maintains window information, where the window information includes first window information and the second window information. The window information includes a window identifier, a level attribute of a window, a screen identifier of a screen on which the window is located, and an interface identifier of an interface displayed in the window. In this application, the first device maintains window information of a locally displayed window (for example, the first window) and window information of a window (for example, the second window) that is on the second device side and that is used to display a projection interface (for example, the second interface). Based on this, the first device may identify a target screen, a target window, and a target interface on which a user operation is performed, to smoothly respond to the user operation.

In a possible implementation, level attributes of the first window and the second window are both top-level windows. In this application, the level attributes of the first window and the second window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

In a possible implementation, the first operation is an operation on the first interface in the first window, and the first operation includes a tap operation, a slide operation, or a touch and hold operation on the first interface. A specific object on which the user operation is performed is not limited in this application. For example, the user operation may be an operation on an interface in a window.

In a possible implementation, that the first device responds to the first operation and the second operation concurrently includes: The first device executes a first action and a second action concurrently. The first action includes: determining, based on the first operation, that a target window on which the first operation is performed is the first interface in the first window; updating the first interface based on the first operation; and displaying an updated first interface in the first window. The second action includes: determining, based on the second operation, that a target window on which the first operation is performed is the second interface in the second window; updating the second interface based on the second operation; and sending an interface configuration parameter of an updated first interface to the second device, to indicate the second device to display the updated second interface in the second window. According to the solution provided in this application, the operation of the user on the interface on the first device side and the operation of the user on the projection interface on the second device side can be responded to concurrently.

In a possible implementation, the first operation is an operation on a body of the first window, and the first operation includes: closing the first window, adjusting a size of the first window, adjusting a display style of the first window, and adjusting a location of the first window. A specific object on which the user operation is performed is not limited in this application. For example, the user operation may be an operation on a body of a window.

In a possible implementation, that the first device responds to the first operation and the second operation concurrently includes: The first device executes a first action and a second action concurrently. The first action includes: determining, based on the first operation, that the first operation is performed on the body of the first window; and adjusting the first window based on the first operation. The second action includes: determining, based on the second operation, that a target window on which the first operation is performed is the second interface in the second window; updating the second interface based on the second operation; and sending an interface configuration parameter of an updated first interface to the second device, to indicate the second device to display the updated second interface in the second window. According to the solution provided in this application, the operation of the user on the window body on the first device side and the operation of the user on the projection interface on the second device side can be responded to concurrently.

In a possible implementation, the method further includes: When the first window is initially started, the first device sets the level attribute of the first window as the top-level window; or when the user performs an operation on the first window for the first time, the first device sets the level attribute of the first window as the top-level window. In the window information maintained by the first device, a specific occasion at which a level attribute of a local window is set as the top-level window is not limited in this application. For example, the first device may trigger setting the local window as the top-level window when the local window is initially started. For another example, the first device may trigger setting the local window as the top-level window when the user operates the local window for the first time.

In a possible implementation, the foregoing method further includes: When receiving the second window information from the second device, the first device sets a level attribute of the second window as the top-level window; or when the user operates the second window for the first time, the first device sets a level attribute of the second window as the top-level window. In the window information maintained by the first device, a specific occasion at which a level attribute of a window for displaying the projection interface on the second device side is set as the top-level window is not limited in this application. For example, the first device may trigger, when receiving window information, from the second device, about the window for displaying the projection interface, setting the window as the top-level window. For another example, the first device may trigger, when the user performs an operation on the projection interface on the second device side for the first time, setting the window in which the projection interface is located as the top-level window.

In a possible implementation, the method further includes: The first device projects a third interface onto the second device; the first device receives third window information from the second device, where the third window information indicates that the second device displays the third interface in a third window; and when receiving a third operation on the second interface in the second window and a fourth operation on the third interface in the third window simultaneously, the first device responds to the third operation and the fourth operation concurrently. The solution in this application is applicable to a scenario in which the first device projects a plurality of interfaces onto the second device. In addition, according to the solution in this application, the user can perform operations on a plurality of windows on the second device side simultaneously, and a plurality of operations of the user on the plurality of windows can be responded to synchronously. This resolves a problem in the conventional technology that the user cannot simultaneously perform operations on different windows on an electronic device concurrently, and improves user experience.

In a possible implementation, the third window is a focus window. It may be understood that the focus window is a window that may currently receive and respond to a user operation. In this application, the second window and the third window are both focus windows. Therefore, in a multi-window projection scenario, the user can perform operations on the second window and the third window simultaneously, and operations of the user on the second window and the third window can be responded to synchronously. This resolves a problem in the conventional technology that the user cannot simultaneously perform operations on different windows on an electronic device concurrently.

In a possible implementation, a level attribute of the third window is the top-level window. In this application, the level attributes of the second window and the third window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

In a possible implementation, the method further includes: The first device displays a fourth interface in a fourth window; and when receiving a fifth operation of the user on the first window and a sixth operation of the user on the fourth window simultaneously, the first device responds to the fifth operation and the sixth operation concurrently. According to the solution in this application, the user can perform operations on a plurality of windows on the first device side simultaneously, and a plurality of operations of the user on the plurality of windows can be responded to synchronously. This resolves a problem in the conventional technology that the user cannot simultaneously perform operations on different windows on an electronic device concurrently, and improves user experience.

In a possible implementation, the fourth window is a focus window. In this application, the first window and the fourth window are both focus windows. Therefore, in a multi-window projection scenario, the user can perform operations on the first window and the fourth window simultaneously, and operations of the user on the first window and the fourth window can be responded to synchronously.

In a possible implementation, a level attribute of the fourth window is the top-level window. In this application, the level attributes of the first window and the fourth window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

In a possible implementation, the fifth operation is an operation on the first interface in the first window, and the sixth operation is an operation on the fourth interface in the fourth window; or the fifth operation is an operation on the first interface in the first window, and the sixth operation is an operation on a body of the fourth window; or the fifth operation is an operation on the body of the first window, and the sixth operation is an operation on the fourth interface in the fourth window; or the fifth operation is an operation on the body of the first window, and the sixth operation is an operation on a body of the fourth window. A specific object on which the user operation is performed is not limited in this application. For example, the user operation may be an operation on a body of a window, or may be an operation on an interface in a window.

According to a third aspect, an electronic device is provided. The electronic device includes: a display unit, configured to display a first interface in a first window; a projection unit, configured to project a second interface onto another device (for example, a second device); a transceiver unit, configured to receive second window information and operation information of a second operation from the second device, where the second window information indicates that the second interface is displayed in a second window of the second device, and the second operation is performed on the second interface in the second window; an input/output unit, configured to receive a first operation of a user on the electronic device; and a processing unit, configured to: when the input/output unit and the transceiver unit separately receive the first operation on the first window and the second operation on the second interface in the second window simultaneously, respond to the first operation and the second operation concurrently.

According to the solution provided in the third aspect, in a multi-window projection scenario, according to the solution provided in this application, the user can perform an operation on a window on the electronic device side and an operation on an interface in a window on the second device side simultaneously, and the first operation and the second operation the second device can be responded to synchronously. This resolves a problem in the conventional technology that the user cannot simultaneously perform operations on different windows on the electronic device side and the second device concurrently, and improves user experience.

In a possible implementation, the electronic device further includes a storage unit, configured to save window information when the electronic device performs projection onto the second device, where the window information includes first window information and the second window information. The window information includes a window identifier, a level attribute of a window, a screen identifier of a screen on which the window is located, and an interface identifier of an interface displayed in the window. In this application, the electronic device maintains window information of a locally displayed window (for example, the first window) and window information of a window (for example, the second window) that is on the second device side and that is used to display a projection interface (for example, the second interface). Based on this, the electronic device may identify a target screen, a target window, and a target interface on which a user operation is performed, to smoothly respond to the user operation.

In a possible implementation, level attributes of the first window and the second window are both top-level windows. In this application, the level attributes of the first window and the second window are both the top-level windows. Therefore, based on the top-level focus obtaining strategy, in this application, the plurality of windows can be used as focus windows simultaneously, to avoid a problem of focus preemption between the windows, so that the user can perform operations on the plurality of windows concurrently, and user experience is improved.

In a possible implementation, the first operation is an operation on the first interface in the first window, and the first operation includes a tap operation, a slide operation, or a touch and hold operation on the first interface. A specific object on which the user operation is performed is not limited in this application. For example, the user operation may be an operation on an interface in a window.

In a possible implementation, that the processing unit responds to the first operation and the second operation concurrently includes: The processing unit executes a first action and a second action concurrently. The first action includes: determining, based on the first operation, that a target window on which the first operation is performed is the first interface in the first window; updating the first interface based on the first operation; and indicating the display unit to display an updated first interface in the first window. The second action includes: determining, based on the second operation, that a target window on which the first operation is performed is the second interface in the second window; updating the second interface based on the second operation; and indicating the transceiver unit to send an interface configuration parameter of an updated first interface to the second device, to indicate the second device to display the updated second interface in the second window. According to the solution provided in this application, the operation of the user on the interface on the electronic device side and the operation of the user on the projection interface on the second device side can be responded to concurrently.

In a possible implementation, the first operation is an operation on a body of the first window, and the first operation includes: closing the first window, adjusting a size of the first window, adjusting a display style of the first window, and adjusting a location of the first window. A specific object on which the user operation is performed is not limited in this application. For example, the user operation may be an operation on a body of a window.

In a possible implementation, that the processing unit responds to the first operation and the second operation concurrently includes: The processing unit executes a first action and a second action concurrently. The first action includes: determining, based on the first operation, that the first operation is performed on the body of the first window; and indicating the display unit to adjust the first window based on the first operation. The second action includes: determining, based on the second operation, that a target window on which the first operation is performed is the second interface in the second window; updating the second interface based on the second operation; and indicating the transceiver unit to send an interface configuration parameter of an updated first interface to the second device, to indicate the second device to display the updated second interface in the second window. According to the solution provided in this application, the operation of the user on a window body on the electronic device side and the operation of the user on the projection interface on the second device side can be responded to concurrently.

In a possible implementation, the processing unit is further configured to: when the first window is initially started, set the level attribute of the first window as the top-level window; or when the user performs an operation on the first window for the first time, set the level attribute of the first window as the top-level window. In the window information maintained by the electronic device, a specific occasion at which a level attribute of a local window is set as the top-level window is not limited in this application. For example, the electronic device may trigger setting the local window as the top-level window when the local window is initially started. For another example, the electronic device may trigger setting the local window as the top-level window when the user operates the local window for the first time.

**In** a possible implementation, the processing unit is further configured to: when the transceiver unit receives the second window information from the second device, set a level attribute of the second window as the top-level window; or when the user operates the second window for the first time, set a level attribute of the second window as the top-level window. **In** the window information maintained by the electronic device, a specific occasion at which a level attribute of a window for displaying the projection interface on the second device side is set as the top-level window is not limited in this application. For example, the electronic device may trigger, when receiving window information, from the second device, about the window for displaying the projection interface, setting the window as the top-level window. For another example, the electronic device may trigger, when the user performs an operation on the projection interface on the second device side for the first time, setting the window in which the projection interface is located as the top-level window.

**In** a possible implementation, the projection unit is further configured to: project a third interface onto the second device. The transceiver unit is further configured to: receive third window information from the second device, where the third window information indicates that the second device displays the third interface in a third window. The processing unit is further configured to: when the electronic device receives a third operation on the second interface in the second window and a fourth operation on the third interface in the third window simultaneously, respond to the third operation and the fourth operation concurrently. The solution in this application is applicable to a scenario in which the electronic device projects a plurality of interfaces onto the second device. **In** addition, according to the solution in this application, the user can perform operations on a plurality of windows on the second device side simultaneously, and a plurality of operations of the user on the plurality of windows can be responded to synchronously. This resolves a problem in the conventional technology that the user cannot simultaneously perform operations on different windows on an electronic device concurrently, and improves user experience.

**In** a possible implementation, the display unit is further configured to: display a fourth interface in a fourth window. The processing unit is further configured to: when the electronic device receives a fifth operation of the user on the first window and a sixth operation of the user on the fourth window simultaneously, respond to the fifth operation and the sixth operation concurrently. According to the solution in this application, the user can perform operations on a plurality of windows on the electronic device side simultaneously, and a plurality of operations of the user on the plurality of windows can be responded to synchronously. This resolves a problem in the conventional technology that the user cannot simultaneously perform operations on different windows on an electronic device concurrently, and improves user experience.

**In** a possible implementation, the fifth operation is an operation on the first interface in the first window, and the sixth operation is an operation on the fourth interface in the fourth window; or the fifth operation is an operation on the first interface in the first window, and the sixth operation is an operation on a body of the fourth window; or the fifth operation is an operation on the body of the first window, and the sixth operation is an operation on the fourth interface in the fourth window; or the fifth operation is an operation on the body of the first window, and the sixth operation is an operation on a body of the fourth window. A specific object on which the user operation is performed is not limited in this application. For example, the user operation may be an operation on a body of a window, or may be an operation on an interface in a window.

According to a fourth aspect, an electronic device is provided. The electronic device includes: a communication interface, configured to perform inter-device communication; a memory, configured to store computer program instructions; and a processor, configured to execute the computer program instructions, to enable the electronic device to implement the method according to any one of the possible implementations of the first aspect.

According to a fifth aspect, a projection system is provided. The projection system includes the electronic device according to the third aspect or the fourth aspect and an electronic device configured to display a projection interface from the electronic device. The projection system is configured to implement the method according to any one of the possible implementations of the second aspect.

According to a sixth aspect, a computer-readable storage medium is provided. The computer-readable storage medium stores computer program instructions. When the computer program instructions are executed by a processor, the method according to any one of the possible implementations of the first aspect is implemented.

According to a seventh aspect, a computer program product including instructions is provided. When the computer program product runs on a computer, the computer is enabled to implement the method according to any one of the possible implementations of the first aspect.

According to an eighth aspect, a chip system is provided. The chip system includes a processing circuit and a storage medium. The storage medium stores computer program instructions. When the computer program instructions are executed by a processor, the method according to any one of the possible implementations of the first aspect is implemented. The chip system may include a chip, or may include a chip and another discrete component.

### BRIEF DESCRIPTION OF DRAWINGS

FIG. 1 is a diagram of a single-device multi-window scenario according to an embodiment of this application;
FIG. 2A-1 and FIG. 2A-2 are diagrams of a multi-window projection scenario according to an embodiment of this application;
FIG. 2B-1 and FIG. 2B-2 are diagrams of another multi-window projection scenario according to an embodiment of this application;
FIG. 3 is a diagram of a hardware structure of a terminal device/collaboration device according to an embodiment of this application;
FIG. 4 is a block diagram of a software structure of a terminal device/collaboration device according to an embodiment of this application;
FIG. 5 is a diagram of a multi-window same-source projection scenario according to an embodiment of this application;
FIG. 6 is a diagram of a multi-window different-source projection scenario according to an embodiment of this application;
FIG. 7 is a flowchart of a window focusing method in a multi-window scenario according to an embodiment of this application;
FIG. 8A is a diagram of a process in which a terminal device concurrently responds to operations of a user on a plurality of windows in a multi-window projection scenario according to an embodiment of this application;
FIG. 8B is another diagram of a process in which a terminal device concurrently responds to operations of a user on a plurality of windows in a multi-window projection scenario according to an embodiment of this application;
FIG. 9 is a diagram of an input event distribution process according to an embodiment of this application;
FIG. 10 is a diagram of an interface display process in a multi-window projection scenario according to an embodiment of this application;
FIG. 11 is a diagram of a single-device multi-window scenario according to an embodiment of this application;
FIG. 12 is another flowchart of a window focusing method in a multi-window scenario according to an embodiment of this application;
FIG. 13 is a diagram of a process in which a terminal device concurrently responds to operations of a user on a plurality of windows in a single-device multi-window scenario according to an embodiment of this application;
FIG. 14 is a diagram in which a user concurrently operates a plurality of windows in a single-device multi-window scenario according to an embodiment of this application; and
FIG. 15 is a block diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, "a plurality of" means two or more unless otherwise specified.

An embodiment of this application provides a window focusing method in a multi-window scenario. According to the method, a plurality of windows in the multi-window scenario are used as focus windows simultaneously, and a plurality of windows receive and respond to user operations concurrently, so that user experience is improved.

The multi-window scenario in embodiments of this application may include but is not limited to the following scenario 1 and scenario 2:

### Scenario 1: single-device multi-window scenario.

The single-device multi-window scenario is a scenario in which a terminal device simultaneously displays a plurality of windows.

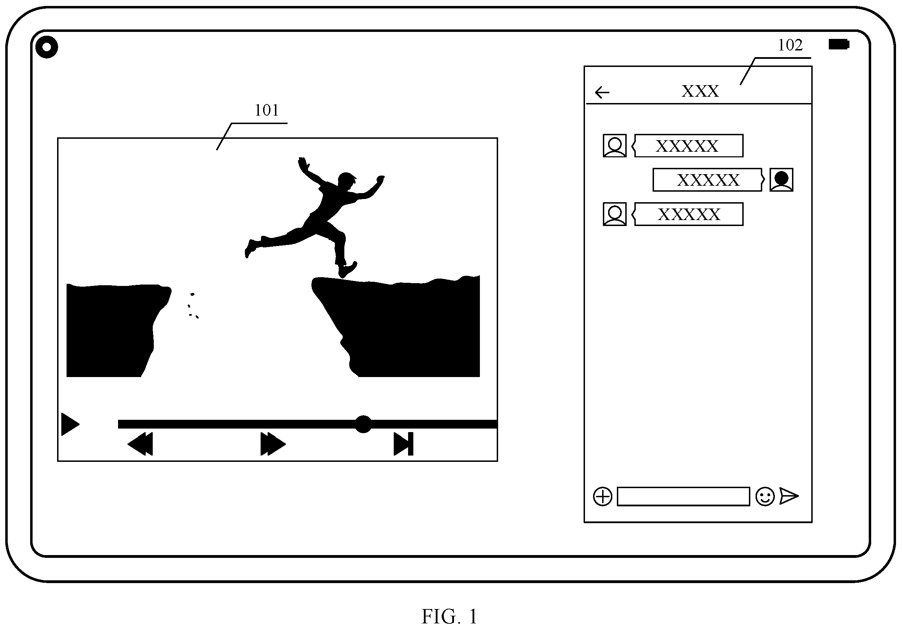

For example, as shown in FIG. 1, the terminal device is a tablet computer, and a video application window 101 and an instant messaging application window 102 are simultaneously displayed on the terminal device. A scenario in which the tablet computer shown in FIG. 1 simultaneously displays the video application window 101 and the instant messaging application window 102 is an example of the single-device multi-window scenario.

It should be noted that, in FIG. 1, only an example in which the terminal device simultaneously displays a plurality of application windows is used. A specific form of the plurality of windows in the single-device multi-window scenario is not limited in embodiments of this application. For example, the window may be a floating window or a picture-in-picture.

### Scenario 2: multi-window projection scenario.

The multi-window projection scenario is a scenario in which a terminal device projects a plurality of windows onto a collaboration device.

In the multi-window projection scenario, the terminal device renders and composites, on a VirtualDisplay (virtual display), an interface of one or more tasks started on the terminal device. The VirtualDisplay includes a MainDispaly area and an extended area. The MainDispaly area is used to render an interface (referred to as a default interface below) that is sent to be displayed on a display of the terminal device, and the extended area is used to render another interface.

Generally, based on different projection requirements, a projection manner used when the terminal device performs projection onto the collaboration device may include two types: same-source projection and different-source projection.

For the same-source projection manner, after the terminal device completes interface rendering and composition on the VirtualDisplay, the terminal device sends a default interface rendered in the MainDispaly area of the VirtualDisplay for display, and sends, to the collaboration device, interface configuration parameters of a plurality of interfaces rendered and composited on the VirtualDisplay. After the interface configuration parameters are sent to the collaboration device, the collaboration device displays the default interface rendered in the MainDispaly area, and displays the another interface rendered in the extended area. Therefore, based on the same-source projection, all interfaces on the terminal device can be projected onto the collaboration device.

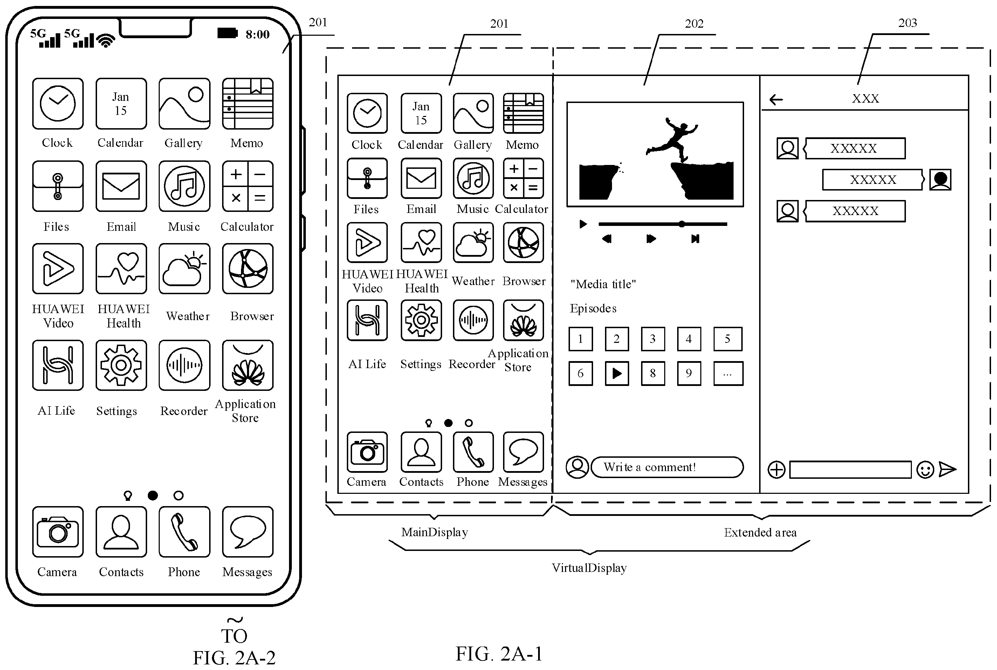

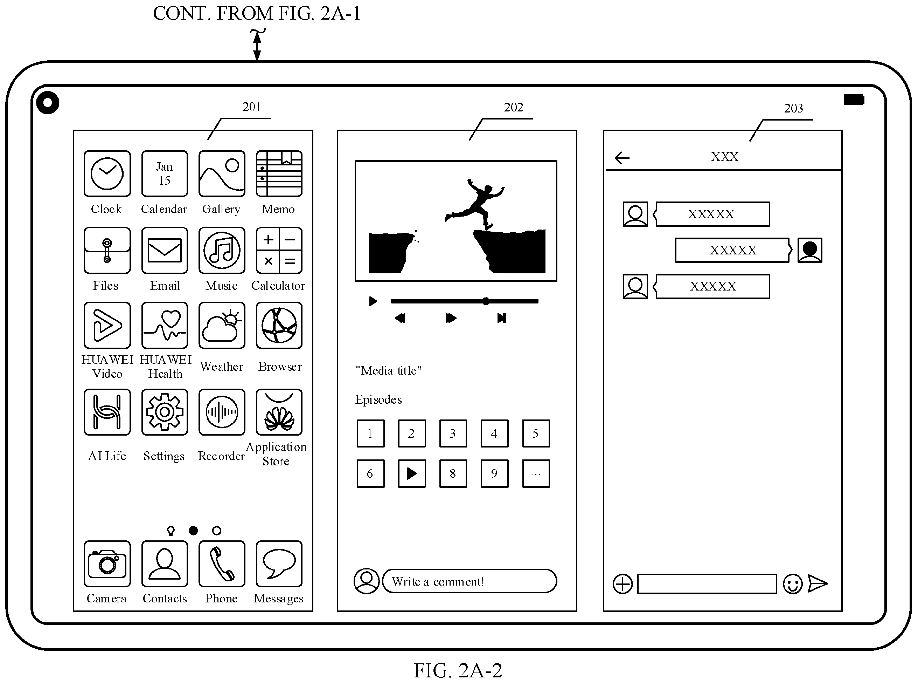

For example, refer to FIG. 2A-1 and FIG. 2A-2. FIG. 2A-1 and FIG. 2A-2 are diagrams of a multi-window same-source projection scenario according to an embodiment of this application. As shown in FIG. 2A-1 and FIG. 2A-2, the terminal device is a mobile phone. In a process of starting an instant messaging application and a news application, the mobile phone renders and composites a mobile phone home screen, an instant messaging application interface, and a news application interface on a VirtualDisplay. When the mobile phone performs projection onto a tablet computer (the tablet computer is the collaboration device) in the same-source projection manner, the mobile phone sends, to the tablet computer, standard video streams corresponding to the mobile phone home screen, the instant messaging application interface, and the news application interface that are rendered and composited on the VirtualDisplay, and sends a default interface (for example, the mobile phone home screen) for display. After the same-source projection is completed, as shown in FIG. 2A-1 and FIG. 2A-2, the mobile phone home screen 201 (that is, the default interface) is displayed on a display of the mobile phone, and a mobile phone home screen window 201, a video application window 202, and an instant messaging application window 203 are simultaneously displayed on a display of the tablet computer.

For the different-source projection manner, after the terminal device completes interface rendering and composition on the VirtualDisplay, the terminal device sends the default interface rendered in the MainDispaly area of the VirtualDisplay for display, and sends, to the collaboration device, an interface configuration parameter of the interface, rendered in the extended area of the VirtualDisplay, other than the default interface. After the interface configuration parameter is sent to the collaboration device, only the interface rendered in the extended area is displayed on the collaboration device. Therefore, based on the different-source projection, some interfaces on the terminal device can be projected onto the collaboration device.

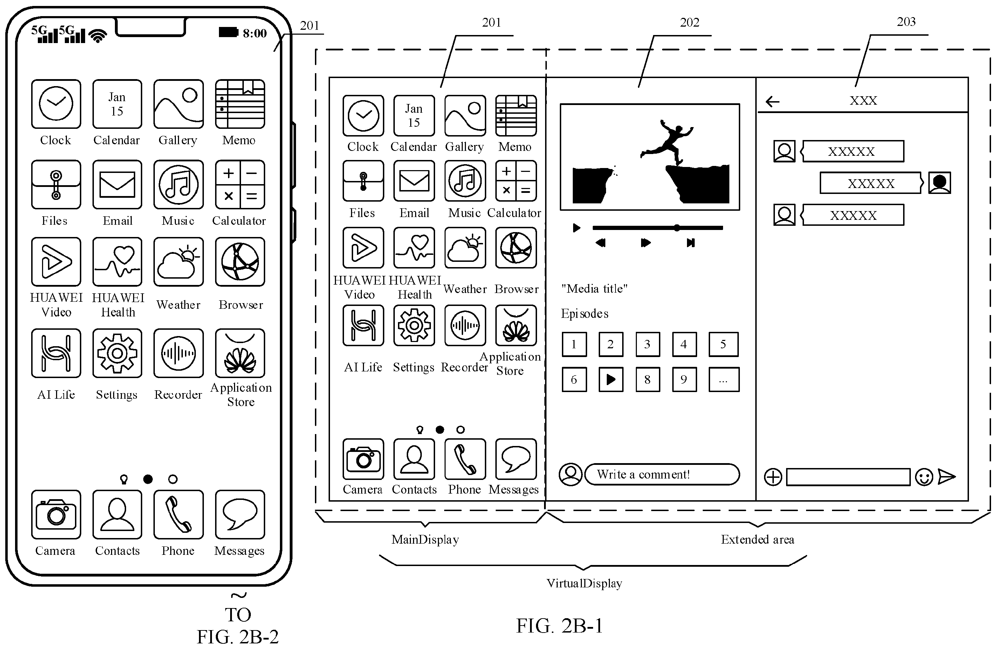

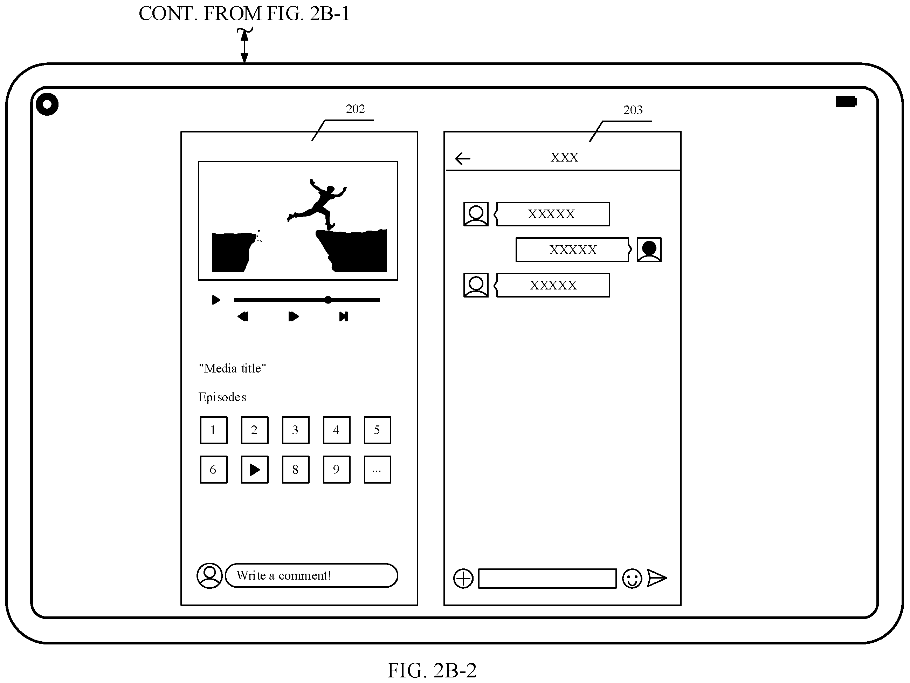

For example, refer to FIG. 2B-1 and FIG. 2B-2. FIG. 2B-1 and FIG. 2B-2 are diagrams of a multi-window different-source projection scenario according to an embodiment of this application. As shown in FIG. B-1 and FIG. 2B-2, the terminal device is a mobile phone. In a process of starting an instant messaging application and a news application, the mobile phone renders and composites a mobile phone home screen, an instant messaging application interface, and a news application interface on a VirtualDisplay. When the mobile phone performs projection onto a tablet computer (the tablet computer is the collaboration device) in the different-source projection manner, the mobile phone sends the mobile phone home screen rendered in a MainDispaly area of the VirtualDisplay to a display of the mobile phone for display, and sends, to the tablet computer, interface configuration parameters corresponding to the instant messaging application interface and the news application interface rendered in an extended area of the VirtualDisplay. After the different-source projection is completed, as shown in FIG. 2B-1 and FIG. 2B-2, the mobile phone home screen 201 (that is, the default interface) is displayed on the display of the mobile phone, and a video application window 202, and an instant messaging application window 203 are simultaneously displayed on a display of the tablet computer.

It should be noted that in FIG. 2A-1 and FIG. A-2 and FIG. 2B-1 and FIG. 2B-2, only an example in which an interface projected by the terminal device onto the collaboration device is displayed in an application window is used. A specific form of a window in the multi-window projection scenario is not limited in embodiments of this application. For example, the window may be a floating window or a picture-in-picture.

In addition, it should be noted that, in FIG. 2A-1 and FIG. 2A-2 and FIG. 2B-1 and FIG. 2B-2, that the terminal device displays only the default interface and projects a plurality of interfaces onto the collaboration device is merely used as an example. In some other examples, the terminal device may alternatively display a plurality of interfaces simultaneously, and project one or more of the plurality of interfaces onto the collaboration device. Alternatively, in some other examples, the terminal device may display only the default interface, and project, onto the collaboration device, an interface different from the default interface. A specific scenario is not limited in embodiments of this application.

It may be understood that an existing window focusing strategy is usually a preemptive top-level focus obtaining strategy. Specifically, a terminal device performs window level management on all windows that are currently running (including running on the foreground and running on the background), and one window corresponds to one level. Based on the top-level focus obtaining strategy, only a top-level window in the window level may obtain a focus, and receive and respond to an operation of a user as a focus window. Therefore, based on a conventional window focusing strategy, only one window at a top level of the window level can obtain a focus at one moment (that is, only one focus window exists at one moment). In other words, in the conventional technology, a plurality of windows in the terminal device cannot obtain a focus simultaneously. Therefore, in actual use, although the terminal device has a function of simultaneously displaying a plurality of windows, a requirement of a user for operating the plurality of windows concurrently cannot be met based on the conventional window focus obtaining strategy.

The single-device multi-window scenario in FIG. 1 is used as an example. Based on the conventional window focusing strategy, because the plurality of windows in the terminal device cannot obtain a focus simultaneously, the user cannot perform an operation on another window synchronously when the user performs an operation on a window in the terminal device. For example, in the scenario shown in FIG. 1, it is assumed that a current focus window is the video application window 101. If the user performs an operation on the instant messaging application window 102, the current focus window is switched from the video application window 101 to the instant messaging application window 102, and the switching of the focus window interrupts an operation of the user on the video application window 101, affecting user experience.

Similarly, in actual use, the terminal device has a function of projecting a plurality of application windows onto the collaboration device, and the collaboration device and the terminal device can support a plurality of input manners, such as mouse input, keyboard input, microphone input, and touch input. Therefore, a technical condition and a hardware condition of application display for the user to operate the plurality of windows concurrently are met. However, because the plurality of application windows projected onto the collaboration device are all from the terminal device, and the plurality of windows in the terminal device cannot obtain a focus simultaneously based on the conventional window focusing strategy, when the terminal device responds to an operation of the user on a window of a device (for example, the terminal device), the user cannot perform an operation on another window concurrently via the terminal device, and cannot perform an operation on another window concurrently via another device (for example, the collaboration device).

The multi-window projection scenario shown in FIG. 2A-1 and FIG. 2A-2 and FIG. 2B-1 and FIG. 2B-2 is used as an example. Based on the conventional window focusing strategy, the user cannot perform operations on a plurality of windows on different device sides concurrently via the terminal device. For example, in the scenario shown in FIG. 2A-1 and FIG. A-2 and FIG. 2B-1 and FIG. 2B-2, it is assumed that a current focus window is the video application window 202 on the tablet computer side. If the user performs an operation on the mobile phone home screen 201 on the mobile phone side, the current focus window is switched from the video application window 202 to a window in which the mobile phone home screen 201 is located, and the switching of the focus window interrupts an operation of the user on the video application window 202 on the tablet computer side. Therefore, based on the conventional window focusing strategy, the user cannot perform operations on different windows on the terminal device side and the collaboration device concurrently, and this affects user experience.

To resolve inconvenience caused by the conventional window focusing strategy to a user in the multi-window scenario, an embodiment of this application provides a window focusing method in a multi-window scenario. The window focusing method in the multi-window scenario provided in this application is applicable to both the foregoing scenario 1 (the single-device multi-window scenario) and the foregoing scenario 2 (the multi-window projection scenario). The multi-window projection scenario may be a multi-window same-source projection scenario, or may be a multi-window different-source projection scenario. This is not limited in embodiments of this application.

For example, in the single-device multi-window scenario, in the window focusing method in the multi-window scenario provided in this embodiment of this application, a plurality of windows on a terminal device can be used as top-level windows simultaneously. Therefore, based on a top-level focus obtaining strategy, the plurality of top-level windows in the terminal device can be used as focus windows simultaneously, so that the user can perform operations on the plurality of windows concurrently. For example, when the tablet computer shown in FIG. 1 displays an instant messaging application window and a video application window, in this embodiment of this application, both the instant messaging application window and the video application window can be located at a top level of a window level, so that the instant messaging application window and the video application window can be used as focus windows simultaneously. In this way, the user can perform an operation (for example, send a speech message in the instant messaging application window) in the instant messaging application window when performing an operation (for example, entering a program name in the video application window) in the video application window.

For another example, in the multi-window projection scenario, according to the window focusing method in the multi-window scenario provided in this embodiment of this application, one or more windows on the terminal device side and one or more windows on the collaboration device side can be used as top-level windows simultaneously. Therefore, based on the top-level focus obtaining strategy, a plurality of top-level windows in the terminal device can be used as focus windows simultaneously, so that the user can separately perform operations on the windows on the terminal device side and the collaboration device side concurrently. For example, when the mobile phone shown in FIG. 2A-1 and FIG. 2A-2 and FIG. 2B-1 and FIG. 2B-2 displays the mobile phone home screen and projects the instant messaging application window and the video application window onto the tablet computer, in this embodiment of this application, a window in which the mobile phone home screen on the mobile phone side is located and the instant messaging application window and the video application window on the tablet computer side can be used as top-level windows simultaneously, so that all the foregoing windows can be used as focus windows. In this way, the user can perform an operation (for example, entering a message into the instant messaging application window on the tablet computer) on the instant messaging application window or the video application window on the tablet computer side when performing an operation (for example, tapping an application icon on the mobile phone home screen) on the mobile phone home screen on the mobile phone side.

The terminal device/collaboration device in embodiments of this application may include but is not limited to electronic devices such as a smartphone, a netbook, a tablet computer, a personal computer (personal computer, PC), a palmtop computer, an in-vehicle device, a wearable device (like a smartwatch, a smart band, and smart glasses), a camera (like a single-lens reflex camera and a card camera), a smart television, a personal digital assistant (personal digital assistant, PDA), a portable multimedia player (portable multimedia player, PMP), a projection device, a smart screen device, an augmented reality (augmented reality, AR)/virtual reality (virtual reality, VR) device, a mixed reality (mixed reality, MR) device, a TV set, or a somatic game console in a human-machine interaction scenario. A specific function and structure of the terminal device/collaboration device are not limited in this application.

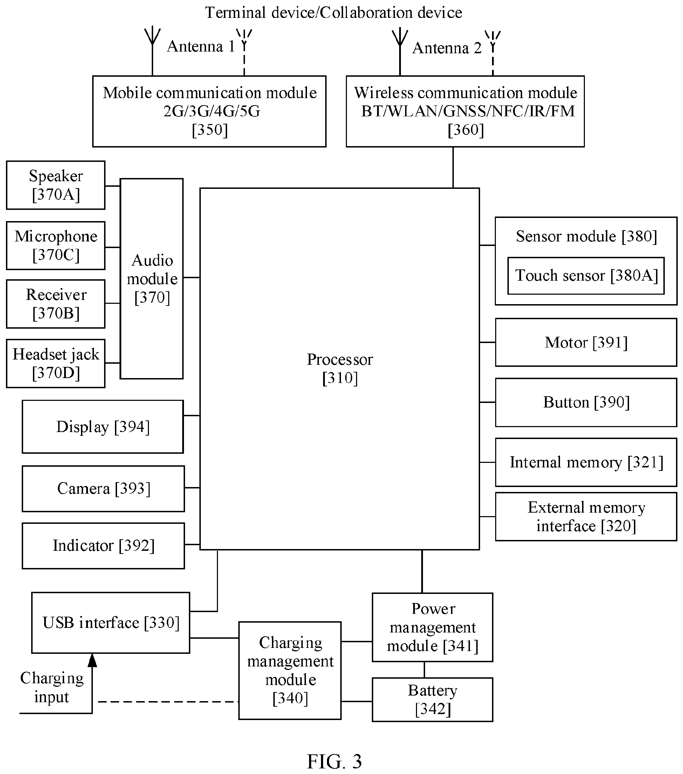

In an example, refer to FIG. 3. FIG. 3 is a diagram of a hardware structure of a terminal device/collaboration device according to an embodiment of this application.

As shown in FIG. 3, the terminal device/collaboration device may include a processor 310, a memory (including an external memory interface 320 and an internal memory 321), a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, and the like. The sensor module 380 may include a touch sensor 380A. Optionally, the sensor module 380 may include a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

It may be understood that an illustrated structure in this embodiment of the present invention does not constitute a specific limitation on the terminal device/collaboration device. In some other embodiments of this application, the terminal device/collaboration device may include more or fewer components than those shown in the figure, a combination of some components, or splits from some components, or a different component layout. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 310 may include a plurality of groups of I2C buses. The processor 310 may be separately coupled to the touch sensor 380A, the microphone, the camera 393, and the like through different I2C bus interfaces. For example, the processor 310 may be coupled to the touch sensor 380A through the I2C interface, so that the processor 310 communicates with the touch sensor 380A through the I2C bus interface, to implement a touch function of the terminal device/collaboration device.

In embodiments of this application, the processor 310 may obtain, through the I2C bus interface, a touch operation that is detected by the touch sensor 380A and that is of a user on an interface, like a tap (such as a single-tap or a double-tap), a slide operation, a touch and hold operation, or a drag operation, to determine a specific intention corresponding to the touch operation, and respond to the touch operation.

The charging management module 340 is configured to receive a charging input from a charger. The power management module 341 is configured to connect the battery 342 and the charging management module 340 to the processor 310. The power management module 341 receives an input from the battery 342 and/or the charging management module 340, and supplies power to the processor 310, the internal memory 321, the display 394, the camera component 393, the wireless communication module 360, and the like.

A wireless communication function of the terminal device/collaboration device may be implemented by using the antenna 1, the antenna 2, the mobile communication module 350, the wireless communication module 360, the modem processor, the baseband processor, and the like.

The antenna 1 and the antenna 2 are configured to transmit and receive electromagnetic wave signals. Each antenna in the terminal device/collaboration device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the terminal device/collaboration device and that includes 2G/3G/4G/5G. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some function modules in the mobile communication module 350 may be disposed in the processor 310. In some embodiments, at least some function modules in the mobile communication module 350 may be disposed in a same device as at least some modules in the processor 310.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through the audio device (not limited to the speaker 370A and receiver 370B), or displays an image or video through the display 394. In some embodiments, the modem processor may be an independent component. In some other embodiments, the modem processor may be independent of the processor 310, and is disposed in a same component as the mobile communication module 350 or another function module.

The wireless communication module 360 may provide a wireless communication solution that is applied to the terminal device/collaboration device and that includes a wireless local area network (wireless local area network, WLAN) (for example, a Wi-Fi network), Bluetooth BT, a global navigation satellite system (global navigation satellite system, GNSS), frequency modulation (frequency modulation, FM), a near field communication (near field communication, NFC) technology, an infrared (infrared, IR) technology, or the like. The wireless communication module 360 may be one or more components integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 1 and the mobile communication module 350 in the terminal device/collaboration device are coupled, and the antenna 2 and the wireless communication module 360 in the terminal device/collaboration device are coupled, so that the terminal device/collaboration device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

In some embodiments of this application, the collaboration device may exchange information with the terminal device based on a wireless communication technology through the wireless communication module 360, for example, receive projection data, send a user input event received by the collaboration device, and receive an instruction for responding to a user operation. Correspondingly, the terminal device may exchange information with the collaboration terminal device based on the wireless communication technology through the wireless communication module 360, for example, send projection data, receive an input event of a user, and send an indication for responding to a user operation.

The terminal device/collaboration device implements a display function through the GPU, the display 394, the application processor, and the like. The GPU is a microprocessor for image processing, and is connected to the display 394 and the application processor. The GPU is configured to perform mathematical and geometric computation, and render an image. The processor 310 may include one or more GPUs that execute program instructions to generate or change display information.

In embodiments of this application, the terminal device/collaboration device may draw and render layers on a plurality of application interfaces through the GPU. The layer drawing is mainly used to draw an interface layer (Layer) to be displayed. An essence of layer drawing is pixel filling. The layer rendering is used to adjust a brightness, contrast, and saturation of a drawn layer without changing a status of an original layer.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device/collaboration device may include one or N displays 394, where N is a positive integer greater than 1.

In embodiments of this application, the terminal device/collaboration device may display one or more windows through the display 394. For example, the window is an application window, a floating window, or a picture-in-picture.

The terminal device/collaboration device may implement a photographing function through the ISP, the camera component 393, the video codec, the GPU, the display 394, the application processor, and the like. In embodiments of this application, the ISP, the camera component 393, the video codec, the GPU, and the display 394 may support a video call between the terminal device/collaboration device and another device.

The external memory interface 320 may be used to connect to an external memory card, for example, a micro SD card, to extend a storage capability of the terminal device/collaboration device. The external memory card communicates with the processor 310 through the external memory interface 320, to implement a data storage function.

The internal memory 321 may be configured to store computer executable program code. For example, a computer program may include an operating system program and an application. The operating system may include but is not limited to operating systems such as Symbian^{®} (Symbian^{®}), Android^{®} (Android^{®}), Microsoft^{®}Windows^{®}, Apple iOS^{®}, Blackberry^{®} (Blackberry^{®}), and Harmony^{®} (Harmony^{®}) OS. The executable program code includes instructions. The processor 310 runs the instructions stored in the internal memory 321, to perform various function applications and data processing of the terminal device/collaboration device. The internal memory 321 may include a program storage area and a data storage area. The program storage area may store an operating system, an application required by at least one function, and the like. The data storage area may store data (like an input event, interface data, or the like) created when the terminal device/collaboration device is used, and the like. In addition, the internal memory 321 may include a high-speed random access memory, and may further include a nonvolatile memory, such as at least one magnetic disk storage component, a flash memory component, and a universal flash storage (universal flash storage, UFS). The processor 310 runs the instructions stored in the internal memory 321 and/or instructions stored in the memory disposed in the processor, to perform various function applications of the terminal device/collaboration device and data processing.

The terminal device/collaboration device may implement an audio function such as music playing or recording through the audio module 370, the speaker 370A, the receiver 370B, the microphone 370C, the application processor, and the like. For specific working principles and functions of the audio module 370, the speaker 370A, the receiver 370B, and the microphone 370C, refer to descriptions in the conventional technology.

The touch sensor 380A is also referred to as a "touch panel". The touch sensor 380A may be disposed on the display 394, and the touch sensor 380A and the display 394 form a touchscreen, which is also referred to as a "touch screen". The touch sensor 380Ais configured to detect a touch operation performed on or near the touch sensor. The touch sensor may transfer a detected touch operation (including information such as a touch location, touch strength, a contact area, and touch duration) to the processor, to determine a touch event type. A visual output related to the touch operation may be provided on the display 394. In some other embodiments, the touch sensor 380A may alternatively be disposed on a surface of the terminal device/collaboration device at a location different from that of the display 394.

In embodiments of this application, the touch operation detected by the touch sensor 380A may be an operation of the user on or near the touchscreen by using a finger, or may be an operation of the user on or near the touchscreen by using a stylus, a touch stylus, a touch ball, or another touch auxiliary tool. This is not limited in this application.

In addition, for descriptions of hardware such as the button 390, the motor 391, and the indicator 392, refer to the conventional technology. Details are not described again in embodiments of this application.

It may be understood that an illustrated structure in FIG. 3 in this application does not constitute a specific limitation on the terminal device/collaboration device. In some other embodiments of this application, the terminal device/collaboration device may include more or fewer components than those shown in the figure, a combination of some components, or splits from some components, or a different component layout. The components shown in the figure may be implemented by using hardware, software, or a combination of software and hardware.

It should be noted that, in embodiments of this application, the terminal device/collaboration device may support establishment of a connection to another peripheral, including a wired communication connection and a wireless communication connection. For example, the peripheral may include but is not limited to an input device like a touchscreen, a keyboard, a mouse, or a microphone, and/or a touch auxiliary tool like a stylus, a touch stylus, or a touch ball. The terminal device/collaboration device may respond to an input event that is input by a user through the input device or the touch auxiliary tool.

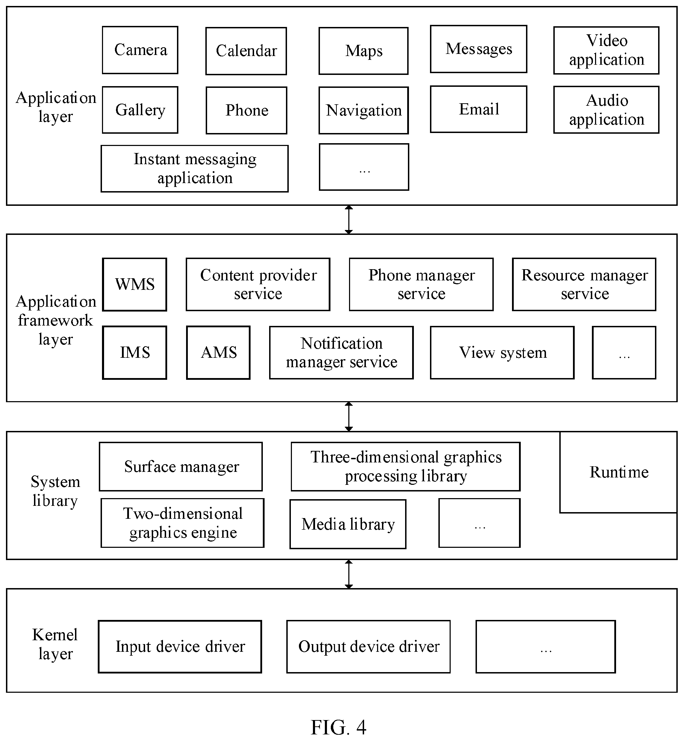

FIG. 4 is a block diagram of a software structure of a terminal device/collaboration device according to an embodiment of this application. For example, software is divided into several layers based on a layered architecture, and each layer has a clear role and task. The layers communicate with each other through a software interface. In some embodiments, as shown in FIG. 4, a software system may be divided into an application layer, an application framework (Framework) layer, a runtime (Runtime) and system library, and a kernel layer from top to bottom based on a layered architecture.

The application layer may include a series of applications. The series of applications may include a third-party application like Maps, Navigation, an audio application, a video application, and an instant messaging application shown in FIG. 4, or may include a native function or application integrated in an operating system of the terminal device like Camera, Gallery, Calendar, Phone, and Messages shown in FIG. 4.

The application framework (Framework) layer provides an application programming interface (application programming interface, API) and a programming framework for an application at the application layer. The application framework layer includes some predefined functions. As shown in FIG. 4, the application framework layer may provide an input manager service (InputManagerService, IMS), a window manager service (WindowManagerService, WMS), an activity manager service (activity manager service, AMS), a content provider service, a view system, a phone manager service, a resource manager service, a notification manager service, and the like. During initialization of a SystemServer, the IMS and WMS are created.

The IMS is used to listen to an input operation of a user, convert the input operation into an input event (Event), send the input event to the WMS, and provide an input related strategy (Policy) for preprocessing of the input event. In some examples, the IMS may be further configured to determine a target window corresponding to the input event.

The WMS is used to provide window management, such as window creation, window startup, window deletion, and window size/style/level management.

In embodiments of this application, the WMS may be used to manage window information. The window information may include but is not limited to information such as a window identifier, a window level, an interface identifier displayed in a window, and a screen identifier (for example, represented by DisplayContent) of a screen on which the window is located.

In the single-device multi-window scenario in embodiments of this application, the WMS of the terminal device may manage window information of all windows on the terminal device and corresponding screen identifiers, that is, screen identifiers (for example, DisplayContent0) of the terminal device.

In the multi-window projection scenario in embodiments of this application, the WMS of the terminal device manages window information of all windows on the terminal device and corresponding screen identifiers (for example, DisplayContent0), and window information of all windows that are on the collaboration device and that are used to display a projection interface and corresponding screen identifiers, that is, screen identifiers (for example, DisplayContent1) of the collaboration device. The WMS of the collaboration device may manage the window information of all the windows (including a window that displays a projection interface and a window that runs a task locally on the collaboration device) on the collaboration device.

It should be noted that in the single-device multi-window scenario described in embodiments of this application, the WMS of the terminal device may not perform screen identity management. This is not specifically limited in embodiments of this application.

In some examples, in a single-device display scenario, the WMS of the terminal device may be further configured to: cooperate with the IMS to determine a target window corresponding to an input event, distribute the input event to an activity (Activity) corresponding to the target window, and update an interface in the target window.

In the multi-window projection scenario, the WMS of the terminal device may be further configured to: cooperate with the IMS to determine a target screen and a target window corresponding to an input event, distribute the input event to an activity (Activity) corresponding to the target window, and update an interface in the target window when the target window is located on the terminal device, or send an updated configuration parameter of an activity (Activity) interface to the collaboration device when the target window is located on the collaboration device.

In some examples, the WMS of the terminal device may further synchronize a window identifier managed by the WMS to the IMS, so that the IMS can determine the target window corresponding to the input event.

In some examples, the WMS of the terminal device may further process the input event based on an input-related strategy, for example, preset service logic. For example, when the input event is a window closing event, the target window corresponding to the input event is deleted. For another example, when the input event is a window location moving event, the target window corresponding to the input event is moved to a corresponding location. For another example, when the input event is a window size adjustment event, a size of moving the target window corresponding to the input event is correspondingly adjusted. A specific correspondence between an input event and a window response manner is not specifically limited in embodiments of this application.

It should be noted that, in embodiments of this application, when the WMS of the terminal device performs window level management, a plurality of windows can be used as top-level windows simultaneously, so that the plurality of windows can be used as focus windows simultaneously. In the single-device multi-window scenario, a plurality of windows displayed on the terminal device may be used as top-level windows simultaneously. In the multi-window projection scenario, one or more windows on the terminal device side and one or more windows on the collaboration device side may be used as top-level windows simultaneously.

The AMS is responsible for managing an activity, starting, switching, and scheduling components in a system, managing and scheduling applications, and the like. Specifically, data classes used to store a process (Process), an activity (Activity), and a task (Task) are defined in the AMS. The data class corresponding to the process (Process) may include process file information, memory status information of the process, an activity, a service, and the like included in the process. Information about an activity can be saved in a task stack (ActivityStack). The ActivityStack is used to schedule activities of an application in a unified manner. The ActivityStack may specifically store information about all running activities. The ActivityStack can also store information about historical activities.

**In** embodiments of this application, the AMS of the terminal device may schedule, based on an indication of the WMS, the activity corresponding to the target window to respond to the input event of the user.

The content provider is configured to store and obtain data, and enable the data to be accessed by an application. The data may include activity information indicated by a simulcast sharing link, like a video, an image, audio, calls that are made and received, a browsing history, a bookmark, a phone book, and the like.

The view system includes visual controls such as a control for displaying a text and a control for displaying an image. The view system may be configured to construct an application interface. A display interface may include one or more views. For example, a display interface including an SMS message notification icon may include a text display view and an image display view.

The phone manager is configured to provide a communication function of the terminal device, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the device vibrates, or the indicator light blinks.

The runtime includes a kernel library and a virtual machine. The runtime is responsible for scheduling and management of the system.

The kernel library includes two parts: a performance function that needs to be invoked in java language, and a kernel library of the system.

The system library may include a plurality of function modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between a hardware layer and a software layer. The kernel layer may include an input device driver and an output device driver shown in FIG. 4. For example, the input device driver is, for example, a keyboard driver, a mouse driver, a touchscreen driver, a sensor driver, a camera driver, or a microphone driver. The output device driver is, for example, a headset driver, a speaker driver, or an audio driver.

For example, in some embodiments of this application, the input operation received by the input device may include a tap (for example, a single-tap or a double-tap) operation, a touch and hold operation, a slide operation, a drag operation, a floating gesture operation, or the like of the user on the touchscreen via a finger. In some other embodiments of this application, the input operation received by the input device may include a frame selection operation, a touch and hold operation, a tap (for example, a single-tap or a double-tap) operation, a slide operation, a drag operation, or the like of the user on the touchscreen via a touch auxiliary tool like a stylus, a touch stylus, or a touch ball. Alternatively, the input operation received by the input device may be a speech command or the like. This is not specifically limited in embodiments of this application.

In embodiments of this application, when the input device is available, the kernel layer may create an input device node for the input device in a preset path. When the user performs an input operation via the input device (like the mouse, the keyboard, or the microphone), input event information is collected by the input device driver (like the mouse driver, the keyboard driver, or the microphone driver) at the kernel layer. Further, because the IMS listens to all input device nodes in the preset path, the IMS listens to the input event.

Similarly, the kernel layer may also create, in the preset path, an input device node (for example, a touch input node, where the node is a virtual node) corresponding to the touch operation. When the user enters a touch operation on the touchscreen via a finger or the touch auxiliary tool like the stylus, the touch stylus, or the touch ball, input event information is collected by the input device driver (like the touchscreen driver or the sensor driver) at the kernel layer. Further, the IMS listens to the input event.

In some embodiments, a path of the input device node may be a /dev/input path.

The input device described above in embodiments of this application is available when the terminal device detects information about the input device, or the terminal device establishes a communication connection (including a wired connection or a wireless connection) to the input device. This is not specifically limited in embodiments of this application.

The following specifically describes, with reference to a specific scenario example, a window focusing method in a multi-window scenario provided in an embodiment of this application.

### Embodiment 1: multi-window projection scenario

In an example of Embodiment 1, a terminal device performs projection onto a collaboration device in a same-source projection manner.

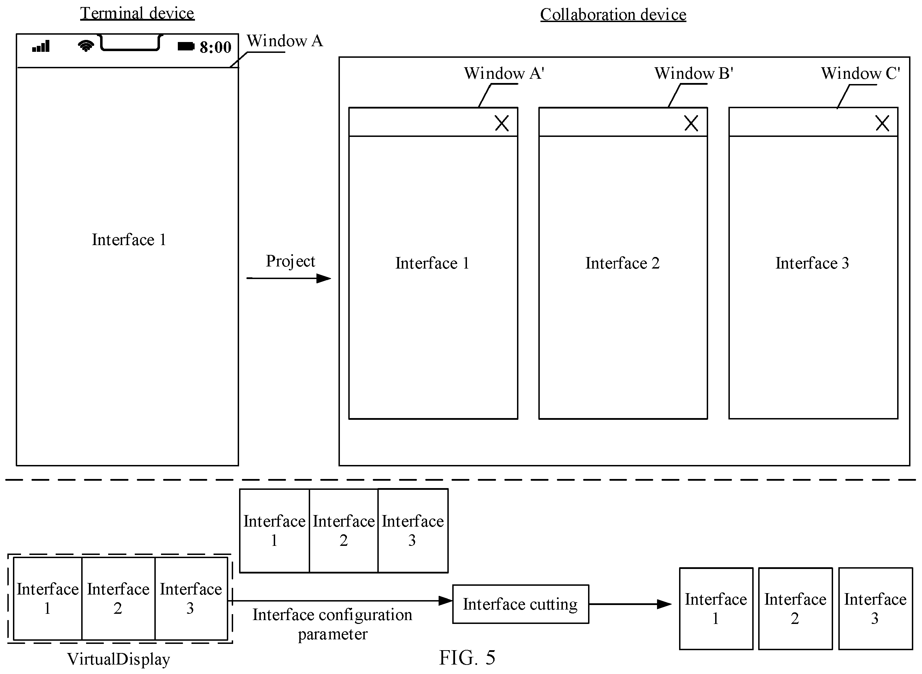

As shown in FIG. 5, it is assumed that when the terminal device starts tasks corresponding to an interface 1, an interface 2, and an interface 3, the terminal device renders and composites the interface 1, the interface 2, and the interface 3 on a VirtualDisplay. Then, the terminal device sends, to a collaboration device, interface configuration parameters corresponding to the interface 1, the interface 2, and the interface 3 that are obtained through composition on the VirtualDisplay. After the terminal device sends the interface configuration parameters to the collaboration device, the terminal device displays a default interface (assumed as the interface 1) through a window A, and the collaboration device performs interface slicing on the interface 1, the interface 2, and the interface 3 that are obtained through composition, to separate the interface 1, the interface 2, and the interface 3, so that the interface 1, the interface 2, and the interface 3 may be respectively sent to independent windows (as shown in FIG. 5, a window A', a window B', and a window C') for display.

The interface configuration parameters may include, but are not limited to, interface identifiers of a plurality of interfaces, interface size information, interface redirection, icons on the interfaces, and texts on the interfaces, and specific display locations, sizes, and colors of elements such as icons and texts on the interfaces. The interface redirection includes landscape orientation display or portrait orientation display. For a specific description of the interface configuration parameter, refer to the conventional technology. This is not limited in this application.

In another example of Embodiment 1, the terminal device performs projection onto the collaboration device in a different-source projection manner.

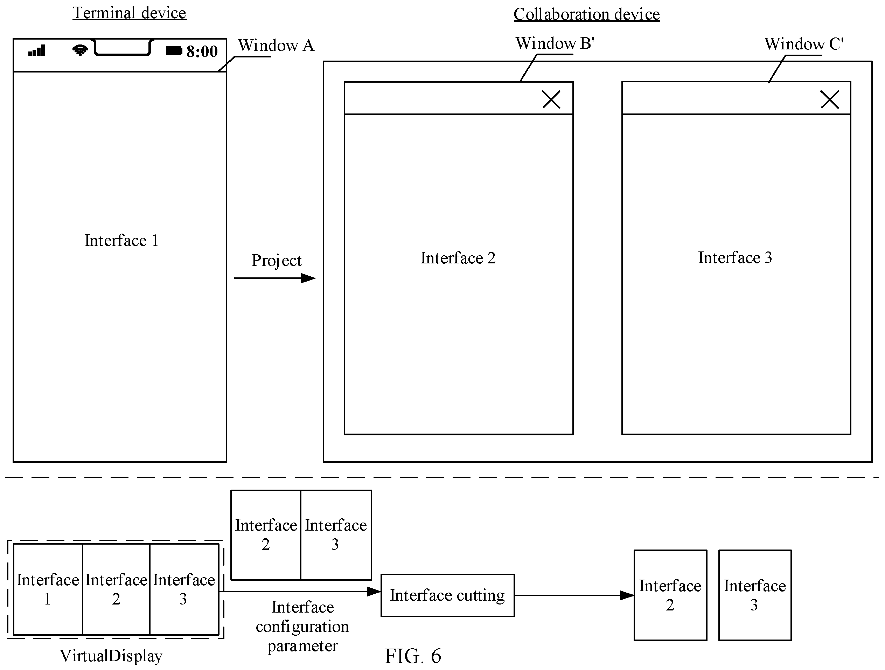

As shown in FIG. 6, it is assumed that when the terminal device starts tasks corresponding to an interface 1, an interface 2, and an interface 3, the terminal device renders and composites the interface 1, the interface 2, and the interface 3 on a VirtualDisplay. Then, the terminal device may send, to a collaboration device, interface configuration parameters corresponding to interfaces (that is, the interface 2 and the interface 3) other than a default interface (assumed as the interface 1) that are obtained through composition on the VirtualDisplay. After the terminal device sends the interface configuration parameters to the collaboration device, the terminal device displays the default interface (assumed as the interface 1) through a window A, and the collaboration device performs interface slicing on the interface 2 and the interface 3 that are obtained through composition, to separate the interface 2 and the interface 3, so that the interface 2 and the interface 3 may be respectively sent to independent windows (as shown in FIG. 6, a window B' and a window C') for display.

In the example shown in FIG. 5, the window A, the window A', the window B', and the window C' are used as top-level windows simultaneously. Therefore, based on a top-level focus obtaining strategy, a plurality of windows in the window A, the window A', the window B', and the window C' in the terminal device can obtain a focus simultaneously, so that a user can perform operations on the plurality of windows concurrently.

Similarly, in the example shown in FIG. 6, the window A, the window B', and the window C' are used as top-level windows simultaneously. Therefore, based on the top-level focus obtaining strategy, a plurality of windows in the window A, the window B', and the window C' in the terminal device can obtain a focus simultaneously, so that the user can perform operations on the plurality of windows concurrently.

The following describes in detail a window focusing method in a multi-window projection scenario provided in an embodiment of this application by using a specific scenario in which interfaces projected by the terminal device onto the collaboration device shown in FIG. 5 and FIG. 6 include the interface 2 and the interface 3 as an example.

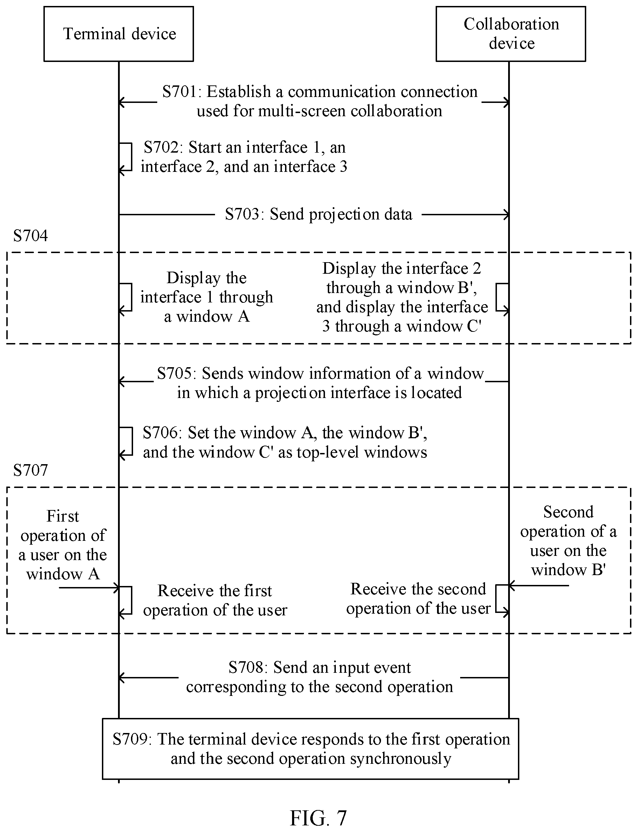

Refer to FIG. 7. FIG. 7 is a flowchart of a window focusing method in a multi-window projection scenario according to an embodiment of this application.

As shown in FIG. 7, the window focusing method in the multi-window projection scenario according to an embodiment of this application includes S701 to S709.

S701: A terminal device establishes a communication connection used for multi-screen collaboration to a collaboration device.

In an example, the communication connection established between the terminal device and the collaboration device may be a wireless connection. For example, the wireless communication connection may be established between the terminal device and the collaboration device based on a wireless transmission protocol. The wireless transmission protocol may include but is not limited to a Bluetooth (Bluetooth, BT) transmission protocol, an NFC protocol, a wireless fidelity (wireless fidelity, Wi-Fi) transmission protocol, or the like. For example, the Wi-Fi transmission protocol may be a Wi-Fi P2P transmission protocol. A wireless connection transceiver includes but is not limited to a transceiver like Bluetooth or Wi-Fi.

In a possible implementation, the wireless communication connection may be established between the terminal device and the collaboration device in a manner like "OneHop", "scanning" (for example, scanning a two-dimensional code or a bar code), or "proximity-based automatic discovery" (for example, through Bluetooth or wireless fidelity (wireless fidelity, Wi-Fi)).

In another example, the communication connection established between the terminal device and the collaboration device may be a wired connection. For example, the wired communication connection may be established between the terminal device and the collaboration device through a video graphics array (video graphics array, VGA), a digital visual interface (digital visual interface, DVI), a high definition multimedia interface (high definition multimedia interface, HDMI), or a data transmission line.

For a specific method and process for establishing the communication connection between the terminal device and the collaboration device in the multi-window projection scenario, refer to the conventional technology. This is not specifically limited in embodiments of this application.

S702: The terminal device starts an interface 1, an interface 2, and an interface 3.

In an example, the terminal device may start the interface 1 when receiving an operation of opening an application 1 by a user, start the interface 2 when receiving an operation of opening an application 2 by the user, and start the interface 3 when receiving an operation of opening an application 3 by the user.

In another example, the terminal device may start the interface 1 when receiving tapping of the user on a control corresponding to the interface 1 on an upper-level interface of the interface 1, start the interface 2 when the user taps a control corresponding to the interface 2 on an upper-level interface of the interface 2, and start the interface 3 when the user taps a control corresponding to the interface 3 on an upper-level interface of the interface 3.

An operation of opening the application 1 by the user may be triggered on an interface of another application, and the another application is different from the application 1. Similarly, an operation of opening the application 2 by the user may be triggered on an interface of another application, where the another application is different from the application 2; and an operation of opening the application 3 by the user may be triggered on an interface of another application, where the another application is different from the application 3.

A specific triggering manner and process of starting the interface 1, the interface 2, and the interface 3 by the terminal device are not limited in embodiments of this application.

When the terminal device starts the interface 1, the interface 2, and the interface 3, the terminal device creates a task stack (ActivityStack), starts tasks (Task) corresponding to the interface 1, the interface 2, and the interface 3, and starts activities corresponding to the interface 1, the interface 2, and the interface 3, for example, an activity 1, an activity 2, and an activity 3. Further, when the terminal device starts the activities corresponding to the interface 1, the interface 2, and the interface 3, the terminal device may render and composite the interface 1, the interface 2, and the interface 3 on a VirtualDisplay for subsequent display and projection.

The terminal device may create different task stacks for the interface 1, the interface 2, and the interface 3, or may create a same task stack for the interface 1, the interface 2, and the interface 3. This is not limited in embodiments of this application. For example, if the interface 1, the interface 2, and the interface 3 each belong to different applications, the terminal device may create different task stacks for the interface 1, the interface 2, and the interface 3. If the interface 1, the interface 2, and the interface 3 belong to a same application, or there is a linkage relationship between the interface 1, the interface 2, and the interface 3, the terminal device may create a same task stack for the interface 1, the interface 2, and the interface 3.

S703: The terminal device sends projection data to the collaboration device.

The projection data includes a configuration parameter of a projection interface. The multi-window same-source projection scenario shown in FIG. 5 is used as an example. The projection data includes configuration parameters of the interface 1, the interface 2, and the interface 3 that are obtained through composition. The multi-window different-source projection scenario shown in FIG. 6 is used as an example. The projection data includes configuration parameters of the interface 2 and the interface 3 that are obtained through composition.

The interface configuration parameters may include, but are not limited to, interface identifiers of a plurality of interfaces, interface size information, interface redirection, icons on the interfaces, and texts on the interfaces, and specific display locations, sizes, and colors of elements such as icons and texts on the interfaces. The interface redirection includes landscape orientation display or portrait orientation display. For a specific description of the interface configuration parameter, refer to the conventional technology. This is not limited in this application.

S704: The terminal device displays the interface 1 through a window A, and the collaboration device displays the interface 2 and the interface 3 through a window B' and a window C' respectively.

For example, as shown in FIG. 6, after the terminal device successfully performs different-source projection onto the collaboration device, the terminal device displays the default interface, that is, the interface 1, through the window A. In addition, the collaboration device displays the interface 2 through the window B', and displays the interface 3 through the window C'.

In some examples, in a case in which the terminal device performs same-source projection onto the collaboration device, as shown in FIG. 5, because the projection data received by the collaboration data includes the interface configuration parameters of the interface 1, the interface 2, and the interface 3 that are obtained through composition, the collaboration device displays the interface 2 through the window B', displays the interface 3 through the window C', and displays the interface 1 through the window A' based on the projection data.

In some examples, as shown in FIG. 5 and FIG. 6, after receiving the projection data, the collaboration device may perform interface slicing on interfaces that are indicated by the projection data and that are obtained through composition, to separate application interfaces, so that the application interfaces can be respectively displayed in independent windows. For example, the collaboration device may divide the interface 1, the interface 2, and the interface 3 into three independent interfaces based on size information of the interface 1, the interface 2, and the interface 3.

S705: The collaboration device sends, to the terminal device, window information of a window in which the projection interface is located.

The window information of the window in which the projection interface is located represents but is not limited to a window identifier and an interface identifier of an interface in the window.

The multi-window same-source projection scenario shown in FIG. 5 is used as an example. The window information that is sent by the collaboration device to the terminal device and that is of the window in which the projection interface is located includes identifiers of the window A', the window B', and the window C', and interface identifiers of the interfaces (that is, an identifier of the interface 1, an identifier of the interface 2, and an identifier of the interface 3) in the window A', the window B', and the window C'. The multi-window different-source projection scenario shown in FIG. 6 is used as an example. The window information that is sent by the collaboration device to the terminal device and in which the projection interface is located includes identifiers of the window B' and the window C', and identifiers of the interfaces (that is, an identifier of the interface 2 and an identifier of the interface 3) in the window B' and the window C'.

The collaboration device sends, to the terminal device, the window information in which the projection interface is located, so that the terminal device can perform window information management on the window in which the projection interface is located.

S706: The terminal device sets the window A, the window B', and the window C' as top-level windows.

In a possible implementation, the terminal device may modify level attributes of the window A, the window B', and the window C' in the window information managed by the terminal device, to set the window A, the window B', and the window C' as top-level windows.

The window information may include but is not limited to a window identifier, a level attribute, a screen object in which a window is located, and an interface identifier of an interface in the window.

For example, in the multi-window same-source projection scenario shown in FIG. 5, the terminal device may manage the following window information:
{Screen object: DisplayContent0;
   level attribute: top-level window (for example, identified by window #0);
   window identifier: ID of a window A (for example, xx1); interface identifier: identifier of an interface 1;
screen object: DisplayContent1;
   level attribute: top-level window (for example, identified by window #0);
   window identifier: ID of a window A (for example, xx2); interface identifier: identifier of an interface 1;
window identifier: ID of a window A (for example, xx3); interface identifier: identifier of an interface 2;
window identifier: ID of a window A (for example, xx4); interface identifier: identifier of an interface 3}.

For example, in the multi-window different-source projection scenario shown in FIG. 6, the terminal device may manage the following window information:
{Screen object: DisplayContent0;
   level attribute: top-level window (for example, identified by window #0);
   window identifier: ID of a window A (for example, xx1); interface identifier: identifier of an interface 1;
screen object: DisplayContent1;
   level attribute: top-level window (for example, identified by window #0);
window identifier: ID of a window A (for example, xx3); interface identifier: identifier of an interface 2;
window identifier: ID of a window A (for example, xx4); interface identifier: identifier of an interface 3}.

However, a management manner of the window information and specific content of the window information are merely used as an example. In some examples, the terminal device may further perform window information management in a list or in another manner, and the window information may further include other information related to the window. This is not limited in embodiments of this application.

In a possible implementation, the terminal device may set the window A as a top-level window when the window A is initially started, and the terminal device may set the window B' and the window C' as top-level windows after receiving the window information that is of the window B' and the window C' and that is sent by the collaboration device.

In another possible implementation, after a window is started, the terminal device may set the window as a top-level window when the user performs an operation on the window for the first time. For example, the terminal device may set the window A as a top-level window when receiving an operation of the user on the window A for the first time; and the terminal device may set a corresponding window as a top-level window when receiving an operation of a user on the window B' or the window C' for the first time.

In some embodiments, when the terminal device receives window information that is of the window B' and the window C' and that is sent by the collaboration device, or when the terminal device receives an operation of the user on the window B' or the window C' for the first time, the terminal device may further update a strategy in the multi-window projection scenario. For example, the strategy update in the multi-window projection scenario includes but is not limited to creating, for the collaboration device, a dedicated channel (channel 2) for processing an operation on the projection interface of the collaboration device.

It may be understood that, after the terminal device sets the window A, the window B', and the window C' as the top-level windows, based on the top-level focus obtaining strategy, a plurality of top-level windows in the terminal device can be used as focus windows simultaneously, and operations of a user on the plurality of windows in the window A, the window B', and the window C' can be responded to synchronously. For example, the terminal device may respond to a first operation of a user on the window A and a second operation of a user on the window B' synchronously. According to this method, a problem that a user operation cannot be responded to in time due to focus preemption between windows can be avoided.

It should be noted that, in some examples in the multi-window projection scenario in this application, a plurality of windows on the terminal device side may be used as top-level windows simultaneously, and a plurality of windows on the collaboration device side may also be used as top-level windows simultaneously. In other words, the plurality of top-level windows on the terminal device side may obtain a focus simultaneously, and the plurality of top-level windows on the collaboration device side may also obtain a focus simultaneously. For example, in the multi-window same-source projection scenario shown in FIG. 5, the window A, the window A', the window B', and the window C' may be used as top-level windows simultaneously, and the window A', the window B', and the window C' may obtain a focus simultaneously.

In some other examples in the multi-window projection scenario in this application, only one window on the terminal device side can be used as the top-level window, and only one window on the collaboration device side can be used as the top-level window. In other words, at any moment, only one of the plurality of windows on the terminal device side can be used as the focus window, and only one of the plurality of windows on the collaboration device side can be used as the focus window. For example, in the multi-window same-source projection scenario shown in FIG. 5, the window A', the window B', and the window C' cannot be used as top-level windows simultaneously. Therefore, only one of the window A', the window B', and the window C' can be used as the focus window at one moment.

On the collaboration device side, to enable the collaboration device to respond to an operation of the user on the window B' in time, the level attribute of the window B' in the collaboration device is also the top-level window.

In a possible implementation, when displaying the projection interface 2 through the window B', the collaboration device may set the level attribute of the window B' as the top-level window.

In another possible implementation, after setting the window B' as the top-level window, the terminal device may synchronize the level attribute of the window B' to the collaboration device. After receiving information synchronized by the terminal device, the collaboration device may set the level attribute of the window B' as the top-level window. S707: The terminal device receives the first operation of the user, where the first operation is performed on the window A; and the collaboration device receives the second operation of the user synchronously, where the second operation is performed on the window B'.

The first operation of the user may be an operation performed on the window A via an input device like a mouse, a keyboard, or a microphone, or may be an operation performed on the window A by the user via a touch auxiliary tool like a stylus, a touch stylus, or a touch ball, or may be an operation performed on the window A by the user via a finger, or the like. Similarly, the second operation of the user may be an operation performed on the window B' via an input device like a mouse, a keyboard, or a microphone, or may be an operation performed on the window B' by the user via a touch auxiliary tool like a stylus, a touch stylus, or a touch ball, or may be an operation performed on the window B' by the user via a finger. This is not specifically limited in embodiments of this application.

In addition, a specific object in a window for which the first operation and the second operation are performed is not limited in embodiments of this application. For example, the first operation or the second operation of the user may include but is not limited to an operation on a control, a link, a picture, or the like on an interface in a window, or an operation of inputting a text, a speech, a picture, an emotion, or the like in an area on an interface in a window.

As described above, when the input device is available, the kernel layer may create an input device node for the input device in a preset path (for example, a /dev/input path). For example, /dev/input/touch is a touch input node, and /dev/input/mouse is a mouse node. When the user performs an input operation via the input device (like the mouse, the keyboard, or the microphone), input event information is collected by the input device driver (like the mouse driver, the keyboard driver, or the microphone driver) at the kernel layer and sent to the preset path. Further, because the IMS listens to all input device nodes in the preset path, the IMS listens to the input event. Therefore, in the example shown in FIG. 7, when the user performs the first operation on the window A, the IMS of the terminal device listens to the first operation. Similarly, when the user performs the second operation on the window B', the IMS of the collaboration device listens to the first operation.

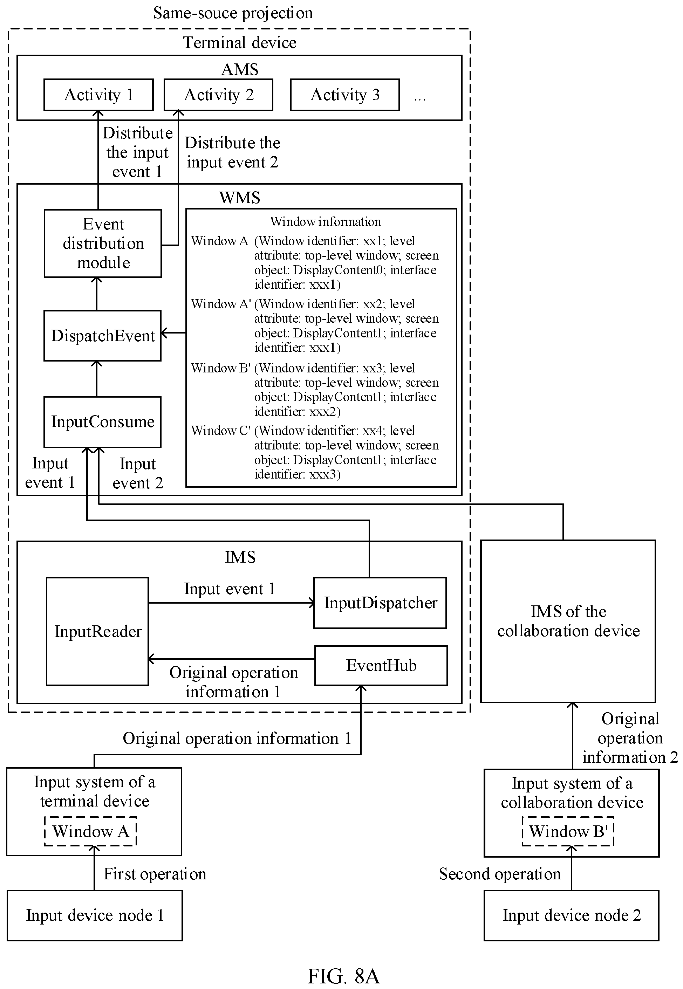

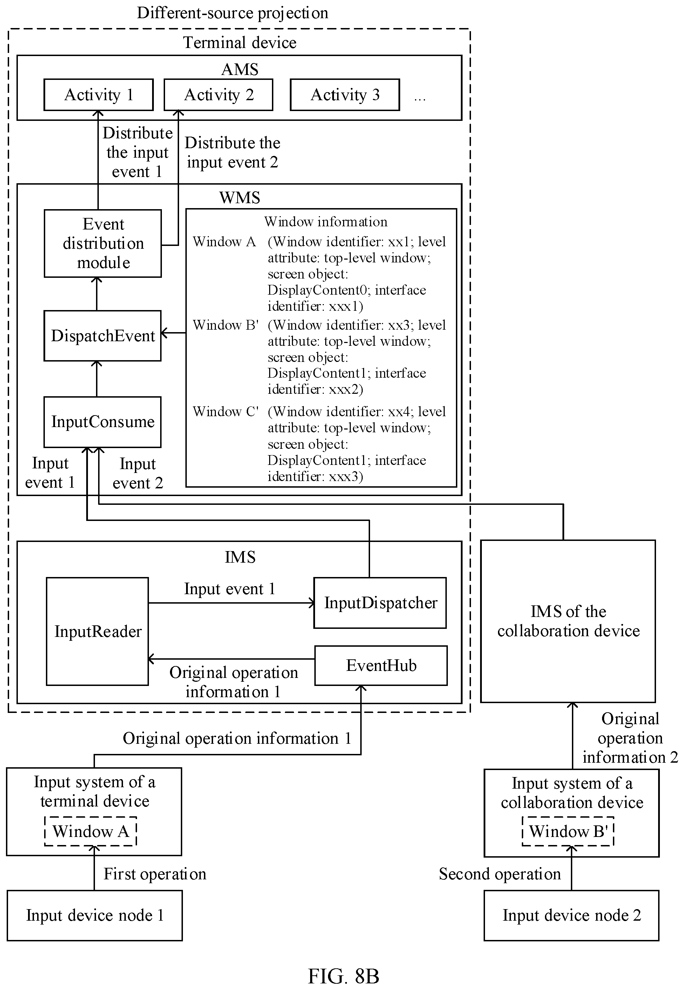

In an example, as shown in FIG. 8A and FIG. 8B, the IMS may include an EventHub. A difference between examples shown in FIG. 8A and FIG. 8B lies in that FIG. 8A shows an input event distribution process in a multi-window same-source projection scenario, and FIG. 8B shows an input event distribution process in a multi-window different-source projection scenario.

As shown in FIG. 8A and FIG. 8B, the EventHub is configured to listen to all input device nodes in a preset path, to obtain an input operation of a user. For example, the EventHub may read original operation information of the input device node in the preset path based on an input event obtaining function (for example, a getEvent function). The original operation information includes but is not limited to input device information of an input operation, information about a device for receiving an input operation, specific operation details, and the like. For example, the input device information is, for example, a device identifier of an input device. The information about the device for receiving the input operation is, for example, an identifier of the device for receiving the input operation. The specific operation details may include but are not limited to an operation type, an operation location, and the like. The operation type includes a tap operation, a touch and hold operation, a slide operation, a character input operation, a cursor movement operation, a speech input operation, a gesture operation, and the like. If the operation type is a character input operation or a speech input operation, the specific operation details may further include specific input content.

As shown in FIG. 8A and FIG. 8B, when the terminal device detects, via the EventHub, a first operation that is from an input device node 1 and that is on a window A, the terminal device may obtain original operation information of the first operation, that is, original operation information 1. The original operation information 1 includes but is not limited to input device information, information about a device for receiving an input operation (that is, terminal device information), specific operation details, and the like. For example, a user performs the first operation by touching a touchscreen of the terminal device via a finger. The input device information is, for example, a touch input identifier. The information about the device for receiving the input operation is, for example, a terminal device identifier. The specific operation details may include but are not limited to a touch operation type (like a tap operation, a touch and hold operation, or a slide operation), a touch location, and the like.

Similarly, as shown in FIG. 8A and FIG. 8B, when the collaboration device detects, via the EventHub, a second operation that is from an input device node 2 and that is on a window B', the collaboration device may obtain original operation information of the second operation, that is, original operation information 2. The original operation information 2 includes but is not limited to input device information, information about a device for receiving an input operation (that is, collaboration device information), specific operation details, and the like. For example, a user performs the second operation by touching a touchscreen of the collaboration device via a finger. The input device information is, for example, a touch input identifier. The information about the device for receiving the input operation is, for example, a terminal device identifier. The specific operation details may include but are not limited to a touch operation type (like a tap operation, a touch and hold operation, or a slide operation), a touch location, and the like.

For a specific process of listening to and processing the input event by the EventHub, refer to descriptions in the conventional technology. Details are not described herein again.

It should be noted that, in this embodiment of this application, the collaboration device may determine, based on the touch location of the second operation, whether the second operation is performed on a body of the window B' or an interface in the window B'.

In a possible case, when it is determined that the second operation is performed on the body of the window B', the IMS of the collaboration device may send the operation event to the WMS of the collaboration device based on a conventional processing procedure, so that the collaboration device responds to the second operation based on the conventional processing procedure of the collaboration device. The operation on the body of the window B' may include but is not limited to operations such as closing the window and adjusting a size/display style/location of the window.

In another possible case, when it is determined that the second operation is performed on the interface in the window B', the collaboration device performs the following S708.

S708: The collaboration device sends, to the terminal device, an input event corresponding to the second operation.

The input event corresponding to the second operation is used to represent input device information of the second operation, information about a device for receiving an input operation, specific operation details, and the like.

For example, a user performs the second operation by touching a touchscreen of the collaboration device via a finger. The input device information is, for example, a touch input identifier. The information about the device for receiving the input operation is, for example, a collaboration device identifier. The specific operation details may include but are not limited to a touch operation type (like a tap operation, a touch and hold operation, or a slide operation), a touch location, and the like.

In another possible implementation, when detecting the second operation, the collaboration device may generate an input event 2 based on the original operation information 2, and then determine a target object of the second operation. When it is determined that the second operation is performed on the body of the window B', the collaboration device may respond to the second operation based on the conventional processing procedure. When it is determined that the second operation is performed on the interface in the window B', the collaboration device sends, to the terminal device, the input event corresponding to the second operation. For example, the IMS of the collaboration device may send, to the WMS of the terminal device through a dedicated channel (channel 2) created by the WMS for the IMS, the input event corresponding to the second operation.

S709: The terminal device responds to the first operation and the second operation synchronously.

In an example, the terminal device may determine, based on the input event, a target window corresponding to the input event, an interface in the target window, and a target screen. Then, the terminal device updates an interface activity in the target window based on the input event, and indicates the target window on the target screen to correspondingly display an updated activity interface.

For example, when the terminal device indicates the target window on the target screen to respond to the input event, for the first operation on the window A on the terminal device, the terminal device may directly update the interface 1 in the window A to respond to the first operation; and for the second operation on the window B' on the collaboration device, the terminal device may send an interface configuration parameter of an interface in an updated window B' to the collaboration device. The collaboration device may update an interface in a corresponding window (that is, the window B') based on an interface identifier carried in the interface configuration parameter. Because the collaboration device has set the window B' as the top-level window, the window B' in the collaboration device can be used as the focus window, so that the collaboration device can respond to the second operation of the user in time, and update the interface based on a latest interface configuration parameter.

It may be understood that, in the foregoing example of this application, because the window A and the window B' are both used as the top-level windows, based on the top-level focus obtaining strategy, the window A and the window B' in the terminal device can be used as the focus windows simultaneously, and the terminal device can respond to the first operation of the user on the window A and the second operation on the window B' synchronously. According to this method, a problem that a user operation cannot be responded to in time due to focus preemption between windows can be avoided.

In an example, after generating the input event corresponding to the user operation, the IMS of the terminal device may determine the target window corresponding to the input event, and send the input event and information about the target window to the WMS of the terminal device. For example, for the operation on the window of the terminal device, the IMS of the terminal device may determine, after generating the input event corresponding to the user operation, the target window corresponding to the input event. Further, the WMS of the terminal device may determine the interface in the target window and the target screen in which the target window is located, and then indicates, after indicating the AMS to update the interface activity that is in the target window and that is running in the target window, the target window on the target screen to perform corresponding interface update.

In an example, the IMS of the terminal device may send the input event to the WMS of the terminal device. The WMS of the terminal device determines the target window corresponding to the input event, the interface in the target window, and the target screen on which the target window is located, and then indicates, after indicating the AMS to update the interface activity in the running target window, the target window on the target screen to perform corresponding interface update.

In a possible case, in this embodiment of this application, for a same interface, the terminal device side and the collaboration device side may update the interface synchronously. For example, when the terminal device indicates the window A to perform corresponding interface update, the interface 1 in the window A' of the terminal device may also perform corresponding interface update synchronously.

It should be noted that, in the foregoing example, only an example in which the first operation is performed on the interface in the window A is used. In some other cases, if the input event is performed on the window A, for example, a window closing event, a window location moving event, a window size adjustment event, or a window display style adjustment event, the terminal device may first determine, based on the input event, a target window and a target screen that correspond to the input event. Then, the terminal device performs corresponding window adjustment on the target window, for example, closing the window or adjusting a location, a size, or a display style of the window.

In some examples, as shown in FIG. 8A and FIG. 8B, the IMS may further include an InputReader and an InputDispatcher.

As shown in FIG. 8A and FIG. 8B, the InputReader is configured to: obtain, from the EventHub, the original operation information obtained by the EventHub through listening, convert the original operation information into the specific input event 1, and send the obtained input event to the InputDispatcher for input event distribution. For example, the InputDispatcher may send the input event to the WMS through a dedicated channel (for example, a channel 1) between the WMS and the InputDispatcher. Similarly, the IMS of the collaboration device (for example, the InputDispatcher of the IMS) may also send, to the WMS through a dedicated channel (for example, the channel 2) created by the WMS for the IMS of the collaboration device, the input event corresponding to the second operation of the user on the window B'.

As shown in FIG. 8A and FIG. 8B, the WMS may include an input consumption queue (for example, an InputConsume), a DispatchEvent, and an event distribution module.

As shown in FIG. 8A and FIG. 8B, after receiving the input event 1 and the input event 2, the WMS may place the input event 1 and the input event 2 into the input consumption queue (for example, the InputConsume), so that the DispatchEvent of the WMS may extract the input event 1 and the input event 2 from the InputConsume, and distribute the input events to the activity (Activity) corresponding to the target window in the AMS via the event distribution module, for example, distribute the input event 1 to the activity 1 and distribute the input event 2 to the activity 2. Then, the activity 1 and the activity 2 may respond to the input events. After the activity 1 and the activity 2 complete activity response, the terminal device may indicate the target window to display an updated activity interface, for example, display an updated activity 1 interface in the window A, and indicate the collaboration device to display an updated activity 2 interface in the window B', so as to respond to the input operation 1 and the input operation 2 concurrently.

It should be noted that, in FIG. 8A and FIG. 8B, only an example in which the input event is performed on the interface in the target window is used as an example. For a case in which the first operation is performed on the window A, after the DispatchEvent of the WMS extracts the input event from the InputConsume, the event distribution module may distribute the input event to the target window for response.

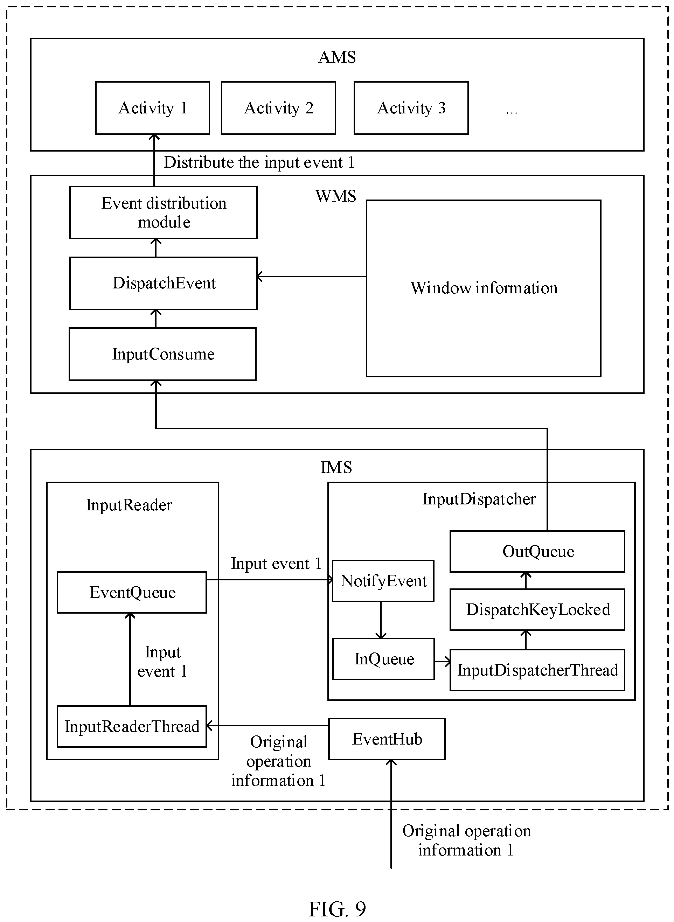

In some embodiments, a process in which the InputDispatcher and the InputReader perform input event-related processing is time-consuming. Therefore, the input event 1 is used as an example. As shown in FIG. 9, the IMS usually creates an InputDispatcherThread and an InputReaderThread for the input event 1. For example, the InputReaderThread may obtain, from the EventHub, the original operation information obtained by the EventHub through listening, convert the original operation information into a specific input event (Event), and add the specific input event to an event queue (for example, an EventQueue). Further, as shown in FIG. 9, an event reporting module (for example, a NotifyEvent) of the InputDispatcher obtains an input event 1 from the EventQueue, places the input event 1 into an input queue (for example, an InQueue) of the InputDispatcher, and then wakes up the InputDispatcherThread. The InputDispatcherThread extracts the input event 1 from the InQueue, determines a target window corresponding to the input event 1, and distributes the input event 1 to the target window.

In a possible example, as shown in FIG. 9, the InputDispatcherThread may extract the input event 1 from the InQueue via a DispatchKeyLocked, place the input event 1 into an output queue (for example, an OutQueue), and distribute the input event 1 to the target window in the WMS. For example, the DispatchKeyLocked may execute findFocusedWindowTargetsLocked to determine the target window of the input event 1, establish an InputChannel connection to the target window, and distribute the input event 1 in the OutQueue to the target window in the WMS through the InputChannel.

The InputChannel is a SocketPair descriptor created by the WMS when the WMS creates a window and encapsulation of operations of the WMS. The SocketPair is used to implement communication between processes in the terminal device. Each of two paired InputChannels has a SocketPair descriptor, which is allocated to the InputDispatcher and the window respectively. Therefore, the DispatchKeyLocked of the InputDispatcher can distribute the input event to the target window through the InputChannel, and the target window can also feed back after the input event is processed to the InputDispatcher through the InputChannel. After receiving the feedback, the InputDispatcher removes the input event from the OutQueue.

It should be noted that, in FIG. 9, only the input event 1 is used as an example. For another input event, a similar processing process may also be used to distribute the input event.

In addition, it should be noted that FIG. 9 is merely an example of the input event distribution process, and specific modules in the IMS and the WMS and functions of the modules are not limited in this application. The IMS or the WMS may not include a module shown in FIG. 9, and/or the IMS or the WMS may include another module. For example, the InputDispatcher may further include an InputFilter module, configured to preprocess the input event. For example, the InputFilter module may obtain the input event from the NotifyEvent, preprocess the input event based on an input-related strategy, and put the input event into the input queue (for example, the InQueue) of the InputDispatcher.

For a specific process of processing the input event by each module of the InputReader, the InputDispatcher, the WMS, and the AMS, refer to descriptions in the conventional technology. Details are not described herein again.

It may be understood that, according to the window focusing method in the multi-window projection scenario provided in this embodiment of this application, a plurality of windows can be used as top levels simultaneously. Therefore, based on the top-level focus obtaining strategy, according to the solution provided in this embodiment of this application, the plurality of windows can be used as the focus windows simultaneously. In comparison with a conventional window focusing strategy in which there is only one top level, only one window at the top level can obtain a focus at one moment, and consequently, a problem due to focus preemption between windows occurs. In the window focusing method in the multi-window projection scenario provided in this embodiment of this application, the problem of focus preemption between the windows can be avoided, so that the user can perform operations on different windows of the terminal device and the collaboration device concurrently, and user experience is improved.

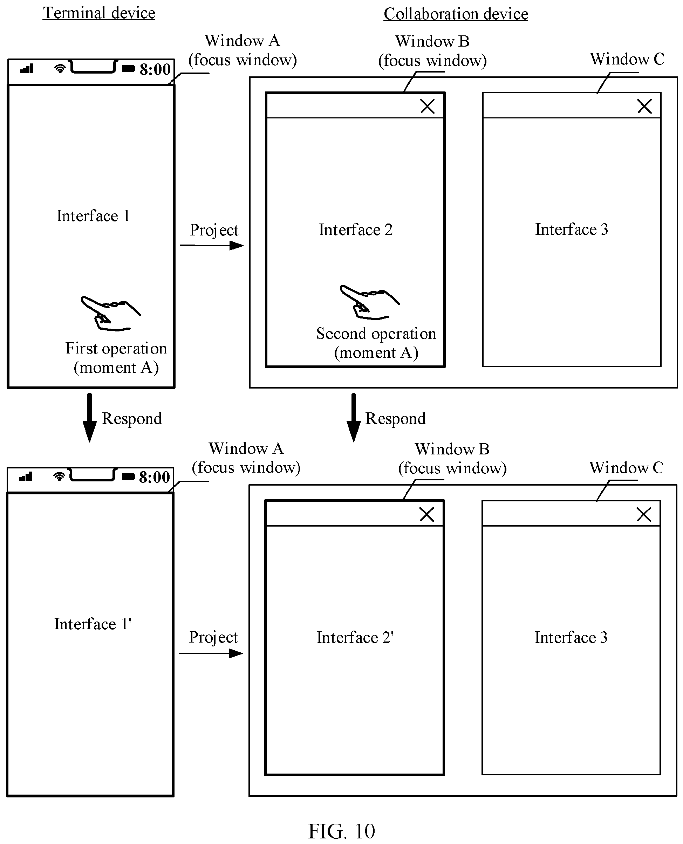

For example, as shown in FIG. 10, when a terminal device projects an interface 2 and an interface 3 onto a collaboration device in a different-source projection manner, and the terminal device displays an interface 1, because a window A in which the interface 1 is located, a window B' in which an interface 2 is located, and a window C' in which an interface 3 is located are all used as top-level windows of the terminal device, the window A, the window B', and the window C' may be used as focus windows simultaneously. Therefore, the terminal device may concurrently respond to a first operation on the window A and a second operation on the window B' that are triggered by a user at a same moment (for example, a moment A). Specifically, the terminal device may display an updated activity 1 interface in the window A to respond to the first operation. Synchronously, the terminal device may indicate the window B' on the collaboration device to respond to the second operation, and display an updated activity 2 interface. As shown in FIG. 10, in response to the first operation, the terminal device displays, through the window A, an interface 1' (that is, the updated activity 1 interface) corresponding to the first operation; and in response to the second operation, the collaboration device displays, through the window B', an interface 2' (that is, the updated activity 2 interface) corresponding to the second operation.

It should be noted that, the user synchronously performing the first operation and the second operation is merely used to reflect that the terminal device can respond to user operations on a plurality of windows concurrently. A specific sequence of performing the first operation and the second operation by the user is not limited in embodiments of this application. For example, the user may perform the first operation before performing the second operation, or perform the second operation before performing the first operation.

In addition, it should be noted that, in the foregoing embodiments, that the terminal device responds to the first operation on the window of the terminal device and the second operation on the window of the collaboration device concurrently is merely used as an example. For a plurality of simultaneously received operations (for example, the third operation on the window B' and the fourth operation on the window C') on a plurality of windows that display the projection interface on the collaboration device, similarly, because all the windows that display the projection interface on the collaboration device are used as the top-level windows of the terminal device, the plurality of windows may be used as the focus windows simultaneously based on the top-level focus obtaining strategy, so that the terminal device may respond to the plurality of operations on the plurality of windows concurrently.

In addition, it should be noted that, in the example shown in FIG. 10, only an example in which the terminal device performs projection onto the collaboration device in the different-source projection manner is used. For a window response effect when the terminal device performs projection onto the collaboration device in the same-source projection manner, refer to the example shown in FIG. 10.

### Embodiment 2: single-device multi-window scenario

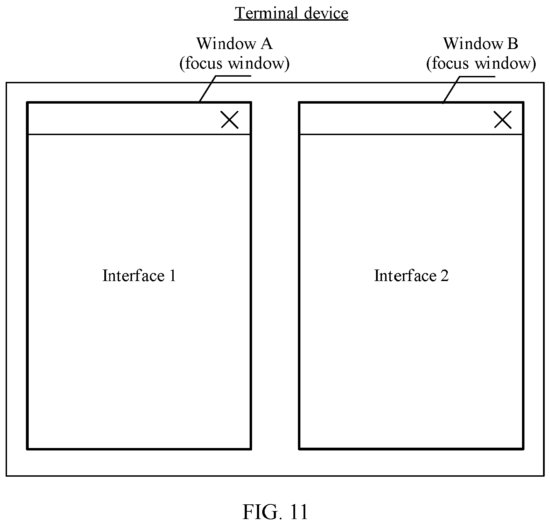

In Embodiment 2, as shown in FIG. 11, it is assumed that when tasks corresponding to an interface 1 and an interface 2 are started on a terminal device, the terminal device renders and composites the interface 1 and the interface 2 on a VirtualDisplay, and then the terminal device sends the rendered interfaces on the VirtualDisplay for display. After sending the rendered interfaces for display, the terminal device displays the interface 1 in a window A, and displays the interface 2 in a window B.

In the example shown in FIG. 11, the window A and the window B are used as top-level windows simultaneously. Therefore, based on a top-level focus obtaining strategy, the window A and the window B in the terminal device can obtain a focus simultaneously, so that a user can perform operations on the window A and the window B concurrently.

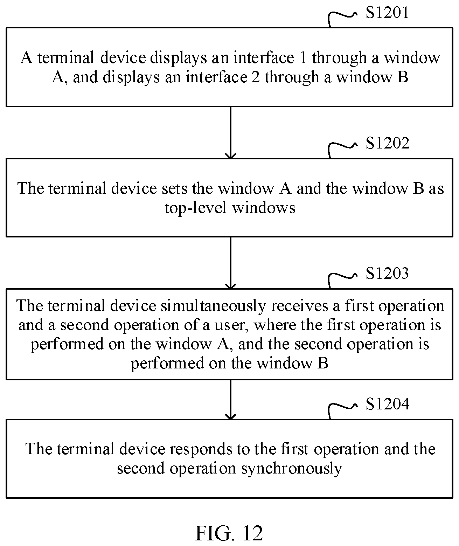

Refer to FIG. 12. FIG. 12 is a flowchart of a window focusing method in a single-device multi-window scenario according to an embodiment of this application.

As shown in FIG. 12, the window focusing method in the single-device multi-window scenario according to an embodiment of this application includes S1201 to S1204.

S1201: A terminal device displays an interface 1 through a window A, and displays an interface 2 through a window B.

For related descriptions of S1201, refer to the explanation and descriptions of S704 in Embodiment 1. Details are not described herein again.

S1202: The terminal device sets the window A and the window B as top-level windows.

In a possible implementation, the terminal device may modify level attributes of the window A and the window B in window information managed by the terminal device, to set the window A and the window B as the top-level windows.

For example, in the single-device multi-window scenario shown in FIG. 11, the terminal device may manage the following window information:
{Screen object: DisplayContent0;
level attribute: top-level window (for example, identified by window #0);
window identifier: ID of a window A (for example, xx1); interface identifier: identifier of an interface 1;
window identifier: ID of a window B (for example, xx3); interface identifier: identifier of an interface 1}.

In a possible implementation, the terminal device may set the window A and the window B as the top-level windows when the window A and the window B are initially started.

In another possible implementation, after a window is started, the terminal device may set the window as a top-level window when a user performs an operation on the window for the first time. For example, the terminal device may set the window of the window A as a top-level window when receiving an operation of the user on the window A for the first time; and the terminal device may set the window B as a top-level window when receiving an operation of the user on the window B for the first time.

It may be understood that, after the terminal device sets the window A and the window B as the top-level windows, based on a top-level focus obtaining strategy, the window A and the window B in the terminal device can be used as focus windows simultaneously.

S1203: The terminal device simultaneously receives a first operation and a second operation of the user, where the first operation is performed on the window A, and the second operation is performed on the window B.

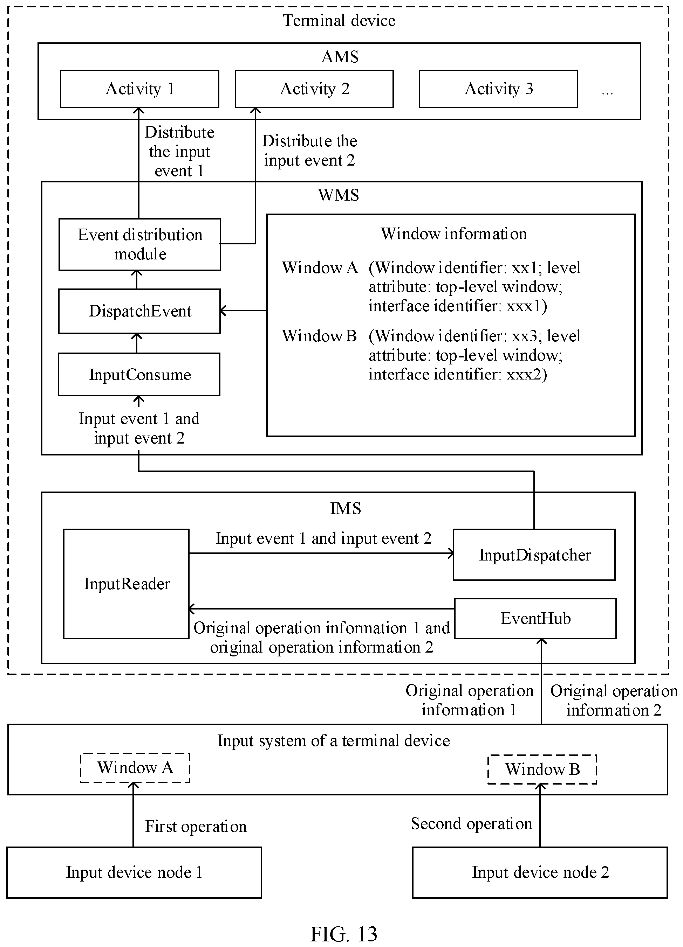

A process in which the terminal device responds to operations of the user on a plurality of windows concurrently in the single-device multi-window scenario shown in FIG. 13 is used as an example. When listening to an input device node in a preset path via an EventHub, the terminal device may obtain original operation information 1 of the first operation of the user on the window A and original operation information 2 of the second operation of the user on the window B. For example, the EventHub may read original operation information of the input device node in the preset path based on an input event obtaining function (for example, a getEvent function). The original operation information includes but is not limited to input device information, information about a device for receiving an input operation (that is, terminal device information), specific operation details, and the like. For example, the user performs an input operation by touching a touchscreen of the terminal device via a finger. The input device information is, for example, a touch input identifier. The information about the device for receiving the input operation is, for example, a terminal device identifier. The specific operation details may include but are not limited to a touch operation type (like a tap operation, a touch and hold operation, or a slide operation), a touch location, and the like.

For related descriptions of S1203, refer to the explanation and descriptions of S707 in Embodiment 1. Details are not described herein again.

S1204: The terminal device responds to the first operation and the second operation synchronously.

In an example, the terminal device may determine, based on an input event, a target window corresponding to the input event and an interface in the target window. Then, the terminal device updates an interface activity in the target window based on the input event, and displays an updated activity interface through the target window.

It may be understood that, in the foregoing example of this application, because the window A and the window B are both used as the top-level windows, based on the top-level focus obtaining strategy, the window A and the window B in the terminal device can be used as the focus windows simultaneously, and the terminal device can respond to the first operation of the user on the window A and the second operation on the window B synchronously. According to this method, a problem that a user operation cannot be responded to in time due to focus preemption between windows can be avoided.

In some examples, as shown in FIG. 13, an IMS may further include an InputReader and an InputDispatcher.

As shown in FIG. 13, the InputReader is configured to: obtain, from the EventHub, the original operation information obtained by the EventHub through listening, convert the original operation information into a specific input event 1 and an input event 2, and send the obtained input events to the InputDispatcher for subsequent input event distribution. For example, the InputDispatcher may send the input event to a WMS through a dedicated channel (channel) between the WMS and the InputDispatcher.

As shown in FIG. 13, the WMS may include an input consumption queue (for example, an InputConsume), a DispatchEvent, and an event distribution module.

As shown in FIG. 13, after receiving the input event 1 and the input event 2, the WMS may place the input event 1 and the input event 2 into the input consumption queue (for example, the InputConsume), so that the DispatchEvent of the WMS may extract the input event 1 and the input event 2 from the InputConsume, and distribute the input events to the activity (Activity) corresponding to the target window in the AMS via the event distribution module, for example, distribute the input event 1 to the activity 1 and distribute the input event 2 to the activity 2. Then, the activity 1 and the activity 2 may respond to the input events, and indicate the target window to display an updated interface, to respond to the input operation 1 and the input operation 2 concurrently.

It should be noted that, in FIG. 13, only an example in which the input event is performed on the interface in the target window is used as an example. For a case in which the input event is performed on a body of the target window, after the DispatchEvent of the WMS extracts the input event from the InputConsume, the event distribution module may distribute the input event to the target window for response.

In some examples, the IMS may create an InputDispatcherThread and an InputReaderThread for the InputDispatcher and the InputReader, respectively, to complete generation and distribution of the input event, and the like. For a specific working process of the InputDispatcher and the InputReader, refer to the example shown in FIG. 9. Details are not described herein again.

It may be understood that, according to the window focusing method in the single-device multi-window scenario provided in this embodiment of this application, a plurality of windows can be used as top levels simultaneously. Therefore, based on the top-level focus obtaining strategy, according to the solution provided in this embodiment of this application, the plurality of windows can be used as the focus windows simultaneously. In comparison with a conventional window focusing strategy in which there is only one top level, only one window at the top level can obtain a focus at one moment, and consequently, a problem due to focus preemption between windows occurs. In the window focusing method in the single-device multi-window scenario provided in this embodiment of this application, the problem of focus preemption between the windows can be avoided, so that the user can perform operations on different windows of the terminal device concurrently, and user experience is improved.

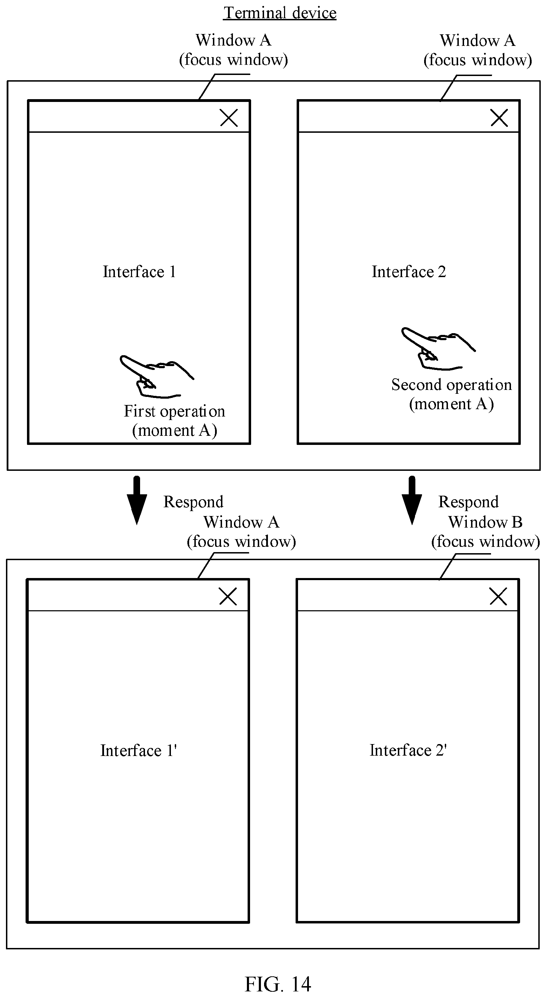

For example, as shown in FIG. 14, when the terminal device displays the interface 1 and the interface 2, because the window A in which the interface 1 is located and the window B in which the interface 2 is located are both used as the top-level windows, based on the top-level focus obtaining strategy, the window A and the window B in the terminal device can be used as the focus windows simultaneously, so that the terminal device can concurrently respond to the first operation on the window A and the second operation on the window B that are triggered by the user at a same moment (for example, a moment A). Specifically, as shown in FIG. 14, the terminal device may concurrently respond to the first operation and the second operation, and concurrently display an updated activity 1 interface (for example, an interface 1' shown in FIG. 14) in the window A and an updated activity 2 interface (for example, an interface 2' shown in FIG. 14) in the window B.

It should be understood that the solutions in embodiments of this application may be appropriately combined for use, and explanations or descriptions of terms in the embodiments may be mutually referenced or explained in the embodiments. This is not limited.

It should be further understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement functions of any one of the foregoing embodiments, the electronic device (for example, the terminal device or the collaboration device) includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

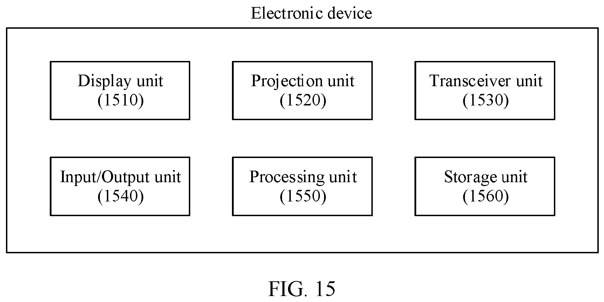

In embodiments of this application, the electronic device (for example, the terminal device or the collaboration device) may be divided into functional modules. For example, each functional module corresponding to each function may be obtained through division, or two or more functions may be integrated into one processing module. The integrated module may be implemented in a form of hardware, or may be implemented in a form of a software function module. For example, as shown in FIG. 15, an electronic device may include a display unit 1510, a projection unit 1520, a transceiver unit 1530, an input/output unit 1540, a processing unit 1550, and a storage unit 1560. It should be noted that, in embodiments of this application, module division is an example, and is merely a logical function division. In actual implementation, another division manner may be used.

It should be further understood that each module in the electronic device may be implemented in a form of software and/or hardware. This is not specifically limited herein. In other words, the electronic device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, all or some of the processes or functions in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

Method or algorithm steps described in combination with embodiments of this application may be implemented by hardware, or may be implemented by a processor by executing software instructions. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in an electronic device. Certainly, the processor and the storage medium may alternatively exist in the electronic device as discrete components.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

## Claims

1. A window focusing method in a multi-window scenario, wherein the method comprises:
displaying, by a first device, a first interface in a first window, and projecting a second interface onto a second device;
receiving, by the first device, second window information from the second device, wherein the second window information indicates that the second interface is displayed in a second window of the second device;
**characterized in that**:
when receiving a first operation on the first window and a second operation on the second interface in the second window simultaneously, responding, by the first device, to the first operation and the second operation concurrently.

2. The method according to claim 1, wherein the first window and the second window are both focus windows.

3. The method according to claim 2, wherein the method further comprises:
when the first device performs projection onto the second device, maintaining, by the first device, window information, wherein the window information comprises first window information and the second window information, wherein
the window information comprises a window identifier, a level attribute of a window, a screen identifier of a screen on which the window is located, and an interface identifier of an interface displayed in the window.

4. The method according to claim 3, wherein level attributes of the first window and the second window are both top-level windows.

5. The method according to any one of claims 1 to 4, wherein the first operation is an operation on the first interface in the first window; and
the first operation comprises a tap operation, a slide operation, or a touch and hold operation on the first interface.

6. The method according to claim 5, wherein the responding, by the first device, to the first operation and the second operation concurrently comprises:
executing, by the first device, a first action and a second action concurrently, wherein
the first action comprises: determining, based on the first operation, that a target window on which the first operation is performed is the first interface in the first window; updating the first interface based on the first operation; and displaying an updated first interface in the first window; and
the second action comprises: determining, based on the second operation, that a target window on which the first operation is performed is the second interface in the second window; updating the second interface based on the second operation; and sending an interface configuration parameter of an updated first interface to the second device, to indicate the second device to display the updated second interface in the second window.

7. The method according to any one of claims 1 to 4, wherein the first operation is an operation on a body of the first window; and
the first operation comprises: closing the first window, adjusting a size of the first window, adjusting a display style of the first window, and adjusting a location of the first window.

8. The method according to claim 7, wherein the responding, by the first device, to the first operation and the second operation concurrently comprises:
executing, by the first device, a first action and a second action concurrently, wherein
the first action comprises: determining, based on the first operation, that the first operation is performed on the body of the first window; and adjusting the first window based on the first operation; and
the second action comprises: determining, based on the second operation, that a target window on which the first operation is performed is the second interface in the second window; updating the second interface based on the second operation; and sending an interface configuration parameter of an updated first interface to the second device, to indicate the second device to display the updated second interface in the second window.

9. The method according to any one of claims 4 to 8, wherein the method further comprises:
when the first window is initially started, setting, by the first device, the level attribute of the first window as the top-level window; or
when a user performs an operation on the first window for the first time, setting, by the first device, the level attribute of the first window as the top-level window.

10. The method according to any one of claims 1 to 9, wherein the method further comprises:
projecting, by the first device, a third interface onto the second device;
receiving, by the first device, third window information from the second device, wherein the third window information indicates that the second device displays the third interface in a third window; and
when receiving a third operation on the second interface in the second window and a fourth operation on the third interface in the third window simultaneously, responding, by the first device, to the third operation and the fourth operation concurrently.

11. The method according to any one of claims 1 to 10, wherein the method further comprises:
displaying, by the first device, a fourth interface in a fourth window; and
when receiving a fifth operation on the first window and a sixth operation on the fourth window that are performed by the user simultaneously, responding, by the first device, to the fifth operation and the sixth operation concurrently.

12. An electronic device, wherein the electronic device comprises:
a communication interface, configured to communicate with another electronic device;
a memory (321), configured to store computer program instructions; and
a processor (310), configured to execute the computer program instructions which cause the electronic device to carry out the method according to any one of claims 1 to 11.

13. A projection system, wherein the projection system comprises:
the electronic device according to claim 12; and
a second electronic device configured to display a projection interface.

14. A computer-readable storage medium, wherein the computer-readable storage medium stores computer program instructions, and when the computer program instructions are executed by a processing circuit, the method according to any one of claims 1 to 11 is carried out.

15. A computer program product comprising instructions, wherein when the computer program product runs on a computer, the computer is adapted to perform the method according to any one of claims 1 to 11.

## Patentansprüche

1. Verfahren zum Fokussieren eines Fensters in einem Mehrfensterszenarium, wobei das Verfahren umfasst:
Anzeigen, durch eine erste Vorrichtung, einer ersten Oberfläche in einem ersten Fenster und Projizieren einer zweiten Oberfläche auf eine zweite Vorrichtung;
Empfangen, in der ersten Vorrichtung, von zweiten Fensterinformationen von der zweiten Vorrichtung, wobei die zweiten Fensterinformationen anweisen, dass die zweite Oberfläche in einem zweiten Fenster der zweiten Vorrichtung angezeigt wird;
**gekennzeichnet durch**:
wenn eine erste Operation in dem ersten Fenster und eine zweite Operation auf der zweiten Oberfläche in dem zweiten Fenster zur gleichen Zeit empfangen werden, gleichzeitiges Antworten, durch die erste Vorrichtung, auf die erste Operation und die zweite Operation.

2. Verfahren nach Anspruch 1, wobei sowohl das erste Fenster als auch das zweite Fenster Fokusfenster sind.

3. Verfahren nach Anspruch 2, wobei das Verfahren ferner umfasst:
wenn die erste Vorrichtung eine Projektion auf die zweite Vorrichtung durchführt, Beibehalten, durch die erste Vorrichtung, von Fensterinformationen, wobei die Fensterinformationen erste Fensterinformationen und die zweiten Fensterinformationen umfassen, wobei
die Fensterinformationen eine Fensterkennung, ein Niveauattribut eines Fensters, eine Bildschirmkennung eines Bildschirms, auf dem sich das Fenster befindet, und eine Oberflächenkennung einer Oberfläche umfassen, die in dem Fenster angezeigt wird.

4. Verfahren nach Anspruch 3, wobei die Niveauattribute sowohl des ersten Fensters als auch des zweiten Fensters jeweils Fenster des obersten Niveaus sind.

5. Verfahren nach einem der Ansprüche 1 bis 4, wobei die erste Operation eine Operation in der ersten Oberfläche in dem ersten Fenster ist; und
wobei die erste Operation eine Tippbedienung, eine Wischbedienung oder eine Tipp- und Haltebedienung an der ersten Oberfläche umfasst.

6. Verfahren nach Anspruch 5, wobei das gleichzeitige Antworten, durch die erste Vorrichtung, auf die erste Operation und die zweite Operation umfasst:
gleichzeitiges Ausführen, durch die erste Vorrichtung, einer ersten Aktion und einer zweiten Aktion, wobei
die erste Aktion umfasst: Ermitteln, basierend auf der ersten Operation, dass ein Zielfenster, in dem die erste Operation durchgeführt wird, die erste Oberfläche in dem ersten Fenster ist; Aktualisieren der ersten Oberfläche basierend auf der ersten Operation; und Anzeigen einer aktualisierten ersten Oberfläche in dem ersten Fenster; und
wobei die zweite Aktion umfasst: Ermitteln, basierend auf der zweiten Operation, dass ein Zielfenster, in dem die erste Operation durchgeführt wird, die zweite Oberfläche in dem zweiten Fenster ist; Aktualisieren der zweiten Oberfläche basierend auf der zweiten Operation; und Senden eines Oberflächenkonfigurationsparameters einer aktualisierten ersten Oberfläche an die zweite Vorrichtung, um die zweite Vorrichtung anzuweisen, die aktualisierte zweite Oberfläche in dem zweiten Fenster anzuzeigen.

7. Verfahren nach einem der Ansprüche 1 bis 4, wobei die erste Operation eine Operation an einem Körper des ersten Fensters ist; und
wobei die erste Operation umfasst: Schließen des ersten Fensters, Anpassen einer Größe des ersten Fensters, Anpassen eines Anzeigestils des ersten Fensters und Anpassen einer Position des ersten Fensters.

8. Verfahren nach Anspruch 7, wobei das gleichzeitige Antworten, durch die erste Vorrichtung, auf die erste Operation und die zweite Operation umfasst:
gleichzeitiges Ausführen, durch die erste Vorrichtung, einer ersten Aktion und einer zweiten Aktion, wobei
die erste Aktion umfasst: Ermitteln, basierend auf der ersten Operation, dass die erste Operation an dem Körper des ersten Fensters durchgeführt wird; und Anpassen des ersten Fensters basierend auf der ersten Operation; und
wobei die zweite Aktion umfasst: Ermitteln, basierend auf der zweiten Operation, dass ein Zielfenster, in dem die erste Operation durchgeführt wird, die zweite Oberfläche in dem zweiten Fenster ist; Aktualisieren der zweiten Oberfläche basierend auf der zweiten Operation; und Senden eines Oberflächenkonfigurationsparameters einer aktualisierten ersten Oberfläche an die zweite Vorrichtung, um die zweite Vorrichtung anzuweisen, die aktualisierte zweite Oberfläche in dem zweiten Fenster anzuzeigen.

9. Verfahren nach einem der Ansprüche 4 bis 8, wobei das Verfahren ferner umfasst:
wenn das erste Fenster anfänglich gestartet wird, Einstellen, durch die erste Vorrichtung, des Niveauattributs des ersten Fensters als das Fenster des obersten Niveaus; oder
wenn ein Benutzer zum ersten Mal eine Operation in dem ersten Fenster durchführt, Einstellen, durch die erste Vorrichtung, des Niveauattributs des ersten Fensters als das Fenster des obersten Niveaus.

10. Verfahren nach einem der Ansprüche 1 bis 9, wobei das Verfahren ferner umfasst:
Projizieren, durch die erste Vorrichtung, einer dritten Oberfläche auf die zweite Vorrichtung;
Empfangen, in der ersten Vorrichtung, von dritten Fensterinformationen von der zweiten Vorrichtung, wobei die dritten Fensterinformationen die zweite Vorrichtung anweisen, die dritte Oberfläche in einem dritten Fenster anzuzeigen; und
wenn eine dritte Operation auf der zweiten Oberfläche in dem zweiten Fenster und eine vierte Operation auf der dritten Oberfläche in dem dritten Fenster zur gleichen Zeit empfangen werden, gleichzeitiges Antworten durch die erste Vorrichtung, auf die dritte Operation und die vierte Operation.

11. Verfahren nach einem der Ansprüche 1 bis 10, wobei das Verfahren ferner umfasst:
Anzeigen, durch die erste Vorrichtung, einer vierten Oberfläche in einem vierten Fenster; und
wenn eine fünfte Operation in dem ersten Fenster und eine sechste Operation in dem vierten Fenster empfangen wird, die von dem Benutzer gleichzeitig durchgeführt werden, gleichzeitiges Antworten, durch die erste Vorrichtung, auf die fünfte Operation und die sechste Operation.

12. Elektronische Vorrichtung, wobei die elektronische Vorrichtung umfasst:
eine Kommunikationsoberfläche, die konfiguriert ist, um mit einer anderen elektronischen Vorrichtung zu kommunizieren;
einen Speicher (321) der konfiguriert ist, um Computerprogrammanweisungen zu speichern; und
einen Prozessor (310), der konfiguriert ist, um die Computerprogrammanweisungen auszuführen, welche die elektronische Vorrichtung veranlassen, das Verfahren nach einem der Ansprüche 1 bis 11 auszuführen.

13. Projektionssystem, wobei das Projektionssystem umfasst:
die Kommunikationsvorrichtung nach Anspruch 12; und
eine zweite elektronische Vorrichtung, die konfiguriert ist zum Anzeigen einer Projektionsoberfläche.

14. Computerlesbares Speichermedium, wobei in dem computerlesbaren Speichermedium Computerprogrammanweisungen gespeichert sind, und wobei, wenn die Computerprogrammanweisungen von einer Verarbeitungsschaltung ausgeführt werden, das Verfahren nach einem der Ansprüche 1 bis 11 ausgeführt wird.

15. Computerprogrammprodukt, das Anweisungen umfasst, wobei, wenn das Computerprogrammprodukt in einem Computer ausgeführt wird, der Computer geeignet ist, um das Verfahren nach einem der Ansprüche 1 bis 11 durchzuführen.

## Revendications

1. Procédé de focalisation sur une fenêtre dans un scénario à fenêtres multiples, dans lequel le procédé comprend :
l'affichage, par un premier dispositif, d'une première interface dans une première fenêtre, et la projection d'une deuxième interface sur un deuxième dispositif ;
la réception, par le premier dispositif, d'informations de deuxième fenêtre en provenance du deuxième dispositif, les informations de deuxième fenêtre indiquant que la deuxième interface est affichée dans une deuxième fenêtre du deuxième dispositif ;
**caractérisé par** :
lors de la réception simultanée d'une première opération sur la première fenêtre et d'une deuxième opération sur la deuxième interface dans la deuxième fenêtre, la réponse, par le premier dispositif, à la première opération et à la deuxième opération simultanément.

2. Procédé selon la revendication 1, dans lequel la première fenêtre et la deuxième fenêtre sont toutes les deux des fenêtres de focalisation.

3. Procédé selon la revendication 2, dans lequel le procédé comprend en outre :
lorsque le premier dispositif réalise une projection sur le deuxième dispositif, le maintien, par le premier dispositif, d'informations de fenêtre, les informations de fenêtre comprenant des informations de première fenêtre et les informations de deuxième fenêtre, dans lequel
les informations de fenêtre comprennent un identificateur de fenêtre, un attribut de niveau d'une fenêtre, un identificateur d'écran d'un écran sur lequel la fenêtre est située, et un identificateur d'interface d'une interface affichée dans la fenêtre.

4. Procédé selon la revendication 3, dans lequel des attributs de niveau de la première fenêtre et de la deuxième fenêtre correspondent tous deux à des fenêtres de niveau supérieur.

5. Procédé selon l'une quelconque des revendications 1 à 4, dans lequel la première opération est une opération sur la première interface dans la première fenêtre ; et
la première opération comprend une opération de tapotement, une opération de glissement, ou une opération de toucher et maintien sur la première interface.

6. Procédé selon la revendication 5, dans lequel la réponse, par le premier dispositif, à la première opération et à la deuxième opération comprend simultanément :
la réalisation, par le premier dispositif, d'une première action et d'une deuxième action simultanément, dans lequel
la première action comprend : la détermination, sur la base de la première opération, qu'une fenêtre cible sur laquelle la première opération est réalisée est la première interface dans la première fenêtre ; la mise à jour de la première interface sur la base de la première opération ; et l'affichage d'une première interface mise à jour dans la première fenêtre ; et
la deuxième action comprend : la détermination, sur la base de la deuxième opération, qu'une fenêtre cible sur laquelle la première opération est réalisée est la deuxième interface dans la deuxième fenêtre ; la mise à jour de la deuxième interface sur la base de la deuxième opération ; et l'envoi d'un paramètre de configuration d'interface d'une première interface mise à jour au deuxième dispositif, pour indiquer au deuxième dispositif d'afficher la deuxième interface mise à jour dans la deuxième fenêtre.

7. Procédé selon l'une quelconque des revendications 1 à 4, dans lequel la première opération est une opération sur un corps de la première fenêtre ; et
la première opération comprend : la fermeture de la première fenêtre, le réglage d'une taille de la première fenêtre, le réglage d'un style d'affichage de la première fenêtre, et le réglage d'un emplacement de la première fenêtre.

8. Procédé selon la revendication 7, dans lequel la réponse, par le premier dispositif, à la première opération et à la deuxième opération comprend simultanément :
la réalisation, par le premier dispositif, d'une première action et d'une deuxième action simultanément, dans lequel
la première action comprend : la détermination, sur la base de la première opération, que la première opération est réalisée sur le corps de la première fenêtre ; et le réglage de la première fenêtre sur la base de la première opération ; et
la deuxième action comprend : la détermination, sur la base de la deuxième opération, qu'une fenêtre cible sur laquelle la première opération est réalisée est la deuxième interface dans la deuxième fenêtre ; la mise à jour de la deuxième interface sur la base de la deuxième opération ; et l'envoi d'un paramètre de configuration d'interface d'une première interface mise à jour au deuxième dispositif, pour indiquer au deuxième dispositif d'afficher la deuxième interface mise à jour dans la deuxième fenêtre.

9. Procédé selon l'une quelconque des revendications 4 à 8, dans lequel le procédé comprend en outre :
lors du démarrage initial de la première fenêtre, la définition, par le premier dispositif, de l'attribut de niveau de la première fenêtre comme fenêtre de niveau supérieur ; ou
lorsqu'un utilisateur réalise une opération sur la première fenêtre pour la première fois, la définition, par le premier dispositif, de l'attribut de niveau de la première fenêtre comme fenêtre de niveau supérieur.

10. Procédé selon l'une quelconque des revendications 1 à 9, dans lequel le procédé comprend en outre :
la projection, par le premier dispositif, d'une troisième interface sur le deuxième dispositif ;
la réception, par le premier dispositif, d'informations de troisième fenêtre en provenance du deuxième dispositif, les informations de troisième fenêtre indiquant que le deuxième dispositif affiche la troisième interface dans une troisième fenêtre ; et
lors de la réception simultanée d'une troisième opération sur la deuxième interface dans la deuxième fenêtre et d'une quatrième opération sur la troisième interface dans la troisième fenêtre, la réponse, par le premier dispositif, à la troisième opération et à la quatrième opération simultanément.

11. Procédé selon l'une quelconque des revendications 1 à 10, dans lequel le procédé comprend en outre :
l'affichage, par le premier dispositif, d'une quatrième interface dans une quatrième fenêtre ; et
lors de la réception d'une cinquième opération sur la première fenêtre et d'une sixième opération sur la quatrième fenêtre qui sont réalisées simultanément par l'utilisateur, la réponse simultanée, par le premier dispositif, à la cinquième opération et à la sixième opération.

12. Dispositif électronique, dans lequel le dispositif électronique comprend :
une interface de communication, configurée pour communiquer avec un autre dispositif électronique ;
une mémoire (321), configurée pour stocker des instructions de programme informatique ; et
un processeur (310), configuré pour exécuter les instructions de programme informatique qui amènent le dispositif électronique à mettre en œuvre le procédé selon l'une quelconque des revendications 1 à 11.

13. Système de projection, dans lequel le système de projection comprend :
le dispositif électronique selon la revendication 12 ; et
un deuxième dispositif électronique configuré pour afficher une interface de projection.

14. Support de stockage lisible par ordinateur, dans lequel le support de stockage lisible par ordinateur stocke des instructions de programme informatique, et lorsque les instructions de programme informatique sont exécutées par un circuit de traitement, le procédé selon l'une quelconque des revendications 1 à 11 est mis en œuvre.

15. Produit programme informatique comprenant des instructions, dans lequel lorsque le produit programme informatique est exécuté sur un ordinateur, l'ordinateur est conçu pour réaliser le procédé selon l'une quelconque des revendications 1 à 11.
